(19) Europäisches Patentamt
European Patent Office
Office européen des brevets

(11) **EP 4 615 064 A1**

(12) **EUROPEAN PATENT APPLICATION**
published in accordance with Art. 153(4) EPC

(43) Date of publication:
**10.09.2025  Bulletin 2025/37**

(21) Application number: **23884979.8**

(22) Date of filing: **01.11.2023**

(51) International Patent Classification (IPC):
***H04W 52/02*** *(2009.01)*     ***H04W 68/02*** *(2009.01)*

(52) Cooperative Patent Classification (CPC):
**H04W 52/02; H04W 68/00; H04W 68/02**

(86) International application number:
**PCT/CN2023/129028**

(87) International publication number:
**WO 2024/094053 (10.05.2024 Gazette 2024/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **03.11.2022  CN 202211372792**
**04.11.2022  CN 202211380600**

(71) Applicant: **Huawei Technologies Co., Ltd.**
**Shenzhen, Guangdong 518129 (CN)**

(72) Inventor: **GUO, Yinghao**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **COMMUNICATION METHOD AND COMMUNICATION APPARATUS**

(57)     This application provides a communication method and a communication apparatus. A terminal device may request a network device to reconfigure current configuration information of a paging signal or current configuration information of a reference signal, so that an interval between a receiving time of the paging signal and a receiving time of the reference signal is adjusted based on an actual service requirement. This can not only reduce energy consumption of the terminal device, but also implement flexible configuration of the paging signal and the reference signal of the terminal device.

FIG. 3

## Description

This application claims priorities to Chinese Patent Application No. 202211372792.6, filed with the China National Intellectual Property Administration on November 3, 2022 and entitled "COMMUNICATION METHOD AND COMMUNICATION APPARATUS", and to Chinese Patent Application No. 202211380600.6, filed with the China National Intellectual Property Administration on November 4, 2022 and entitled "COMMUNICATION METHOD AND COMMUNICATION APPARATUS", both of which are incorporated herein by reference in their entireties.

## TECHNICAL FIELD

This application relates to the communication field, and more specifically, to a communication method and a communication apparatus in the communication field.

## BACKGROUND

To reduce power consumption of a terminal device in a radio resource control_idle (radio resource control_idle, RRC_IDLE) state or a radio resource control_inactive (RRC_INACTIVE) state, the terminal device receives a paging signal in a discontinuous reception (discontinuous reception, DRX) manner. In addition, if the terminal device needs to receive another reference signal in a DRX cycle, the terminal device is paged again to receive the another reference signal. In this case, how to reduce energy consumption of the terminal device is an urgent problem to be resolved.

## SUMMARY

Embodiments of this application provide a communication method and apparatus, to reduce energy consumption of a terminal device.

According to a first aspect, a communication method is provided. The method may be performed by a terminal device, may be performed by a component (for example, a processor, a chip, or a chip system) of the terminal device, or may be implemented by a logical module or software that can implement all or some functions of the terminal device. The method includes: A terminal device receives first configuration information, where the first configuration information indicates a first time, the first time is a receiving time of a first signal, and the first signal is one party of a paging signal and a reference signal. The terminal device receives second configuration information, where the second configuration information indicates a second time, the second time is a receiving time of a second signal, and the second signal is the other party of the paging signal and the reference signal. The terminal device sends first information, where the first information is used to request to adjust the receiving time of the second signal, and the first information is determined based on the first configuration information. The terminal device receives second information, where the second information indicates a third time, and the third time is an adjusted receiving time of the second signal.

Alternatively, in an implementation, a terminal device receives first configuration information, where the first configuration information indicates a first time, the first time is a receiving time period of a first signal, and the first signal is one party of a paging signal and a reference signal. The terminal device receives second configuration information, where the second configuration information indicates a second time, the second time is a receiving time of a second signal, and the second signal is the other party of the paging signal and the reference signal. The terminal device sends first information, where the first information indicates a first offset, or the first information includes the first configuration information, and the first offset is determined based on the first configuration information. The terminal device receives second information, where the second information indicates a second offset, and the second offset is determined based on the first information; or the terminal device receives third configuration information, where the third configuration information indicates a third time period, and the third time period is determined based on the first information. The terminal device receives the second signal in the third time period.

Specifically, the "time" may represent an occasion (occasion), or may represent a time period, and may be determined based on a specific receiving status of the first signal or the second signal. This is not limited in this application. It should be noted that the "time" mentioned below may also be represented as an occasion (occasion) or a time period.

According to the foregoing method, not only energy consumption of the terminal device can be reduced, but also the paging signal and the reference signal that are received by the terminal device can be flexibly configured.

With reference to the first aspect, in some implementations of the first aspect, if the first signal is the reference signal and the second signal is the paging signal, the first information further includes information about the reference signal.

Specifically, the information about the reference signal includes at least one of the following information of the reference signal:

an absolute radio frequency channel number (absolute radio frequency channel number, ARFCN), a sending time, a time domain offset (offset), a sending cycle (repetition), a measurement length (measurement length), and the like.

It should be understood that when the second signal is the paging signal, the first signal is the reference signal. Therefore, the first configuration information includes configuration information of the reference signal. The configuration information of the reference signal included in the first configuration information may be the same as or different from the information about the reference signal included in the first information. This is not limited in this application.

According to the foregoing method, the terminal device sends the information about the reference signal to a network side, so that the network side adjusts a receiving time of the paging signal. A network element on the network side may be a mobility management network element or an access network device. This is not limited in this application.

With reference to the first aspect, in some implementations of the first aspect, the first signal is the reference signal, the second signal is the paging signal, and the first information further includes information about the paging signal.

Specifically, the information about the paging signal includes at least one of the following information:

a discontinuous reception DRX cycle to which the paging signal belongs, a quantity of paging frame (paging frame, PF) groups, a paging frame offset, a paging frame index, an adjustment value of the paging frame offset, a quantity of paging occasions, a paging occasion (paging occasion, PO) index, an adjustment value of a first globally unique temporary terminal device identity (globally unique temporary UE identity, GUTI), a second GUTI, an adjustment value of the second GUTI, a paging group ID, and a first time window. The first GUTI identifies the terminal device, the second GUTI is used to page the terminal device, and the first time window is used to receive the paging signal.

Specifically, the information about the paging signal included in the first information includes two parts: A first part is a current discontinuous reception DRX cycle to which the paging signal of the terminal device belongs, a quantity of paging frame groups in the current DRX cycle, a paging frame offset in the current DRX cycle, a paging frame index in the current DRX cycle, a quantity of paging occasions in the current DRX cycle, and a paging occasion index and a second GUTI in the current DRX cycle. A second part is an adjustment value of a paging frame offset that the terminal device expects to adjust, an adjustment value of a first GUTI, an adjustment value of the second GUTI, and a first time window in which the terminal device expects to receive the paging signal.

It may be understood that when the first information does not include the information about the reference signal, the information about the paging signal needs to include the second part; or when the first information includes the information about the reference signal, the information about the paging signal needs to include the first part.

Optionally, the third time may alternatively be determined based on the first time window.

Specifically, a quantity of first time windows may correspond to a quantity of validity areas of the reference signal.

According to the foregoing method, the terminal device sends the information about the paging signal and an adjustment value of the information about the paging signal to the network side, so that the network side adjusts the receiving time of the paging signal. The network element on the network side may be the mobility management network element or the access network device. This is not limited in this application.

With reference to the first aspect, in some implementations of the first aspect, the second information includes at least one of the following information:

a discontinuous reception DRX cycle to which the paging signal belongs, a quantity of paging frame PF groups, a paging frame offset, a paging frame index, an adjustment value of the paging frame offset, a quantity of paging occasions, a paging occasion index, an adjustment value of a first globally unique temporary terminal device identity GUTI, a second GUTI, an adjustment value of the second GUTI, and a paging group ID. The first GUTI identifies the terminal device, and the second GUTI is used to page the terminal device.

Specifically, the information about the paging signal included in the second information also includes two parts: A first part is an adjusted discontinuous reception DRX cycle to which the paging signal belongs, a quantity of paging frame groups in the adjusted DRX cycle, a paging frame offset in the adjusted DRX cycle, a paging frame index in the adjusted DRX cycle, a quantity of paging occasions in the adjusted DRX cycle, and a paging occasion index and a second GUTI in the adjusted DRX cycle. A second part is an adjusted adjustment value of a paging frame offset, an adjustment value of a first GUTI, and an adjusted adjustment value of the second GUTI.

With reference to the first aspect, in some implementations of the first aspect, the first information is carried in location measurement indication (LocationMeasurementIndication) information, and the location measurement indication information is used to request inactive-state DRX (INACTIVE DRX) configuration information.

In addition, the location measurement indication information may further include a first identifier, and the first identifier indicates that the location measurement indication information is used to request the inactive-state DRX configuration information.

For example, the inactive-state DRX configuration information may be requested by using one bit in the location measurement indication information.

According to the foregoing method, signaling overheads for requesting the inactive-state DRX configuration information can be reduced.

With reference to the first aspect, in some implementations of the first aspect, that the terminal device sends first information includes: The terminal device indicates, by using an LTE positioning protocol (LTE positioning protocol, LPP) layer, a non-access stratum (non-access stratum, NAS) to send the first information; and/or that the terminal device receives second information includes: The terminal device indicates, by using a long term evolution positioning protocol LPP layer, the non-access NAS layer to receive the second information.

Specifically, conditions needed by the terminal device to send the first information are as follows: First, the terminal device has a capability for aligning the first signal with the second signal; and second, a time interval between the first signal and the second signal is greater than a first threshold.

With reference to the first aspect, in some implementations of the first aspect, the first information may be carried in a terminal device assistant message (user assistant information, UAI).

With reference to the first aspect, in some implementations of the first aspect, the first information and the second information include information about a first area, and the first area is a validity area of the reference signal.

Specifically, the information about the first area may be an identifier of the first area, or the information about the first area may be a cell identifier list of cells included in the first area.

Specifically, in an implementation, the terminal device sends a validity area of the reference signal associated with the first information; and the terminal device receives a validity area of the reference signal associated with the second information.

It should be understood that DRX configuration information may be determined based on the validity area of the reference signal.

With reference to the first aspect, in some implementations of the first aspect, that the terminal device sends first information includes:

The terminal device sends the first information to a mobility management network element, or the terminal device sends the first information to an access network device.

With reference to the first aspect, in some implementations of the first aspect, the first signal is the paging signal, the second signal is the reference signal, and the first information includes information about the paging signal.

Specifically, the information about the paging signal includes at least one of the following information:

a discontinuous reception DRX cycle to which the paging signal belongs, a quantity of paging frame groups, identification information of a paging frame group, a paging frame offset, a paging frame index, a quantity of paging occasions, a paging occasion index, an identifier of the terminal device, and the like.

It should be understood that when the first signal is the paging signal, the second signal is the reference signal. Therefore, the first configuration information includes configuration information of the paging signal. The configuration information of the paging signal included in the first configuration information may be the same as or different from the information about the paging signal included in the first information. This is not limited in this application.

According to the foregoing method, the terminal device sends the information about the paging signal to the network side, so that the network side adjusts a receiving time of the reference signal. The network element on the network side may be a location management network element. This is not limited in this application.

With reference to the first aspect, in some implementations of the first aspect, the first information further includes the information about the reference signal.

Specifically, the information about the reference signal includes at least one of the following information of the reference signal:

an absolute radio frequency channel number (absolute radio frequency channel number, ARFCN), a sending time, a time domain offset (offset), a sending cycle (repetition), a measurement length (measurement length), a first offset, and the like. The first offset is determined based on the first configuration information. Specifically, the first configuration information herein corresponds to the configuration information of the paging signal.

According to the foregoing method, the terminal device sends the information about the reference signal and an adjustment value of the information about the reference signal to the network side, so that the network side adjusts the receiving time of the reference signal. The network element on the network side may be the location management network element. This is not limited in this application.

With reference to the first aspect, in some implementations of the first aspect, the first information further includes a reason for sending the first information.

For example, the reason why the terminal device sends the first information may be that reception of the paging signal is not aligned with reception of the reference signal.

With reference to the first aspect, in some implementations of the first aspect, an interval between the third time and the first time is less than an interval between the second time and the first time.

Specifically, the third time is an adjusted receiving time of the second signal, the second time is a receiving time of the second signal before the second signal is adjusted, and the first time is a current receiving time of the first signal.

According to the foregoing method, time in which the terminal device is paged can be reduced, to reduce the energy consumption of the terminal device.

In addition, the interval between the third time and the first time may also be less than the first threshold. The first threshold may be set based on an actual service requirement. This is not limited in this application.

With reference to the first aspect, the first configuration information or the second configuration information is discontinuous reception DRX configuration information.

With reference to the first aspect, in some implementations of the first aspect, the first information further includes information about a capability of the terminal device for aligning the first signal with the second signal.

The terminal device reports, to the network side, whether the terminal device supports alignment between the first signal and the second signal, so that the network side determines whether configuration information of the second signal needs to be reconfigured for the terminal device.

With reference to the first aspect, in some implementations of the first aspect, the second information further indicates an identifier of one terminal device group for the terminal device.

Specifically, the terminal device may determine, based on an identifier of a terminal device group indicated by the network side, a paging frame and a paging occasion used for receiving the second signal.

With reference to the first aspect, in some implementations of the first aspect, the first signal is the paging signal, and the second signal is a positioning reference signal; or the first signal is a positioning reference signal, and the second signal is the paging signal.

The positioning reference signal is aligned with the paging signal, so that energy consumption of the terminal device during positioning can be reduced.

According to a second aspect, a communication method is provided. The method may be performed by a mobility management network element, may be performed by a component (for example, a processor, a chip, or a chip system) of the mobility management network element, or may be implemented by a logical module or software that can implement all or some functions of the mobility management network element. The method includes: A mobility management network element receives first information, where the first information is used to request to adjust a receiving time of a paging signal. The mobility management network element sends second information, where the second information indicates a third time, and the third time is an adjusted receiving time of the paging signal. The mobility management network element sends the paging signal at the third time.

Specifically, the "time" may represent an occasion (occasion), or may represent a time period, and may be determined based on a specific receiving status of the paging signal. This is not limited in this application. It should be noted that the "time" mentioned below may also be represented as an occasion (occasion) or a time period.

According to the foregoing method, the mobility management network element may flexibly configure the paging signal that is requested to be adjusted.

With reference to the second aspect, in some implementations of the second aspect, the first information includes information about a reference signal.

Specifically, the information about the reference signal includes at least one of the following information of the reference signal:

an absolute radio frequency channel number (absolute radio frequency channel number, ARFCN), a sending time, a time domain offset (offset), a sending cycle (repetition), a measurement length (measurement length), and the like.

According to the foregoing method, the mobility management network element may adjust the receiving time of the paging signal based on the information about the reference signal, so that an adjusted receiving time of the paging signal is aligned with a receiving time of the reference signal as much as possible.

With reference to the second aspect, in some implementations of the second aspect, the first information further includes information about the paging signal.

Specifically, the information about the paging signal includes at least one of information:

a discontinuous reception DRX cycle to which the paging signal belongs, a quantity of paging frame groups, identification information of a paging frame group, a paging frame offset, a paging frame index, an adjustment value of the paging frame offset, a quantity of paging occasions, a paging occasion index, an adjustment value of a first globally unique temporary terminal device identity GUTI, a second GUTI, an adjustment value of the second GUTI, and a first time window. The first GUTI identifies a terminal device, the second GUTI is used to page the terminal device, and the first time window is used to receive the paging signal.

Specifically, the information about the paging signal included in the first information includes two parts: A first part is a current discontinuous reception DRX cycle to which the paging signal of the terminal device belongs, a quantity of paging frame groups in the current DRX cycle, a paging frame offset in the current DRX cycle, a paging frame index in the current DRX cycle, a quantity of paging occasions in the current DRX cycle, and a paging occasion index and a second GUTI in the current DRX cycle. A second part is an adjustment value of a paging frame offset that the terminal device expects to adjust, an adjustment value of a first GUTI, an adjustment value of the second GUTI, and a first time window in which the terminal device expects to receive the paging signal.

It may be understood that when the first information does not include the information about the reference signal, the information about the paging signal needs to include the second part; or when the first information includes the information about the reference signal, the information about the paging signal needs to include the first part.

Optionally, the third time may alternatively be determined based on the first time window.

According to the foregoing method, the mobility management network element adjusts the receiving time of the paging signal based on an adjustment value that is of the information about the paging signal and that is expected by the terminal device, so that an adjusted receiving time of the paging signal better meets a requirement of the terminal device for aligning the paging signal with the reference signal.

With reference to the second aspect, in some implementations of the second aspect, the second information includes at least one of the following information:

the discontinuous reception DRX cycle to which the paging signal belongs, the quantity of paging frame PF groups, the paging frame offset, the paging frame index, the adjustment value of the paging frame offset, the quantity of paging occasions, the paging occasion index, the adjustment value of the first globally unique temporary terminal device identity GUTI, the second GUTI, the adjustment value of the second GUTI, and a paging group ID. The first GUTI identifies the terminal device, and the second GUTI is used to page the terminal device.

Specifically, the information about the paging signal included in the second information also includes two parts: A first part is an adjusted discontinuous reception DRX cycle to which the paging signal belongs, a quantity of paging frame groups in the adjusted DRX cycle, a paging frame offset in the adjusted DRX cycle, a paging frame index in the adjusted DRX cycle, a quantity of paging occasions in the adjusted DRX cycle, and a paging occasion index and a second GUTI in the adjusted DRX cycle. A second part is an adjusted adjustment value of a paging frame offset, an adjusted adjustment value of a first GUTI, and an adjusted adjustment value of the second GUTI.

With reference to the second aspect, in some implementations of the second aspect, the first information and the second information include information about a first area, and the first area is a validity area of the reference signal.

Specifically, the information about the first area may be an identifier of the first area, or the information about the first area may be a cell identifier list of cells included in the first area.

Specifically, in an implementation, the terminal device sends a validity area of the reference signal associated with the first information; and the terminal device receives a validity area of the reference signal associated with the second information.

It should be understood that DRX configuration information may be determined based on the validity area of the reference signal.

With reference to the second aspect, in some implementations of the second aspect, an interval between the third time and a first time is less than an interval between a second time and the first time, the second time is a receiving time of the paging signal before the paging signal is adjusted, and the first time is a receiving time of the reference signal.

According to the foregoing method, time in which the terminal device is paged can be reduced, to reduce energy consumption of the terminal device.

In addition, the interval between the third time and the first time may also be less than a first threshold. The first threshold may be set based on an actual service requirement. This is not limited in this application.

With reference to the second aspect, in some implementations of the second aspect, the first information further includes information about a capability of the terminal device for aligning a first signal with a second signal.

Received information indicating whether the terminal device supports alignment between the paging signal and the reference signal helps the mobility management network element determine whether configuration information of the paging signal needs to be reconfigured for the terminal device.

With reference to the second aspect, in some implementations of the second aspect, the second information further indicates an identifier of one terminal device group for the terminal device.

Specifically, the terminal device may determine, based on an identifier of a terminal device group indicated by a network side, a paging frame and a paging occasion used for receiving the paging signal.

With reference to the second aspect, in some implementations of the second aspect, the paging signal is the paging signal, and the reference signal is a positioning reference signal.

The positioning reference signal is aligned with the paging signal, so that energy consumption of the terminal device during positioning can be reduced.

According to a third aspect, a communication method is provided. The method may be performed by an access network device, may be performed by a component (for example, a processor, a chip, or a chip system) of the access network device, or may be implemented by a logical module or software that can implement all or some functions of the access network device. The method includes: An access network device receives first information, where the first information is used to request to adjust a receiving time of a paging signal. The access network device sends second information, where the second information indicates a third time, and the third time is an adjusted receiving time of the paging signal. The access network device sends the paging signal at the third time.

Specifically, the "time" may represent an occasion (occasion), or may represent a time period, and may be determined based on a specific receiving status of the paging signal. This is not limited in this application. It should be noted that the "time" mentioned below may also be represented as an occasion (occasion) or a time period.

According to the foregoing method, the access network device may flexibly configure the paging signal that is requested to be adjusted.

With reference to the third aspect, in some implementations of the third aspect, the first information includes information about a reference signal.

Specifically, the information about the reference signal includes at least one of the following information of the reference signal:

an absolute radio frequency channel number (absolute radio frequency channel number, ARFCN), a sending time, a time domain offset (offset), a sending cycle (repetition), a measurement length (measurement length), and the like.

According to the foregoing method, the access network device may adjust the receiving time of the paging signal based on the information about the reference signal, so that an adjusted receiving time of the paging signal is aligned with a receiving time of the reference signal as much as possible.

With reference to the third aspect, in some implementations of the third aspect, the first information further includes information about the paging signal.

Specifically, the information about the paging signal includes at least one of information:

a discontinuous reception DRX cycle to which the paging signal belongs, a quantity of paging frame groups, identification information of a paging frame group, a paging frame offset, a paging frame index, an adjustment value of the paging frame offset, a quantity of paging occasions, a paging occasion index, and a first time window. The first time window is used to receive the paging signal.

Specifically, the information about the paging signal included in the first information includes two parts: A first part is a current discontinuous reception DRX cycle to which the paging signal of the terminal device belongs, a quantity of paging frame PF groups in the current DRX cycle, a paging frame offset in the current DRX cycle, a paging frame index in the current DRX cycle, a quantity of paging occasions in the current DRX cycle, and a paging occasion index in the current DRX cycle. A second part is an adjustment value of a paging frame offset that the terminal device expects to adjust and a first time window in which the terminal device expects to receive the paging signal.

It may be understood that when the first information does not include the information about the reference signal, the information about the paging signal needs to include the second part; or when the first information includes the information about the reference signal, the information about the paging signal needs to include the first part.

Optionally, the third time may alternatively be determined based on the first time window.

According to the foregoing method, the access network device adjusts the receiving time of the paging signal based on an adjustment value that is of the information about the paging signal and that is expected by the terminal device, so that the adjusted receiving time of the paging signal better meets a requirement of the terminal device for aligning the paging signal with the reference signal.

With reference to the third aspect, in some implementations of the third aspect, the second information includes at least one of the following information:

the discontinuous reception DRX cycle to which the paging signal belongs, the quantity of paging frame groups, the identification information of the paging frame group, the paging frame offset, the paging frame index, the adjustment value of the paging frame offset, the quantity of paging occasions, and the paging occasion index.

Specifically, the information about the paging signal included in the second information also includes two parts: A first part is an adjusted discontinuous reception DRX cycle to which the paging signal belongs, a quantity of paging frame groups in the adjusted DRX cycle, a paging frame offset in the adjusted DRX cycle, a paging frame index in the adjusted DRX cycle, a quantity of paging occasions in the adjusted DRX cycle, and a paging occasion index in the adjusted DRX cycle. A second part is an adjusted adjustment value of a paging frame offset.

With reference to the third aspect, in some implementations of the third aspect, the first information and the second information include information about a first area, and the first area is a validity area of the reference signal.

Specifically, the information about the first area may be an identifier of the first area, or the information about the first area may be a cell identifier list of cells included in the first area.

Specifically, in an implementation, the terminal device sends a validity area of the reference signal associated with the first information; and the terminal device receives a validity area of the reference signal associated with the second information.

With reference to the third aspect, in some implementations of the third aspect, the first information is carried in location measurement indication (LocationMeasurementIndication) information, and the location measurement indication information is used to request inactive-state DRX (INACTIVE DRX) configuration information.

In addition, the location measurement indication information may further include a first identifier, and the first identifier indicates that the location measurement indication information is used to request the inactive-state DRX configuration information.

For example, the inactive-state DRX configuration information may be requested by using one bit in the location measurement indication information.

According to the foregoing method, signaling overheads for requesting the inactive-state DRX configuration information can be reduced.

With reference to the third aspect, in some implementations of the third aspect, the first information may be carried in a UAI.

With reference to the third aspect, in some implementations of the third aspect, that the access network device sends the paging signal at the third time includes: The access network device receives, at the fourth time, a next generation interface application protocol NG-AP sent by a mobility management network element. Specifically, the NG-AP sent by the mobility management network element carries at least one of identification information of the terminal device, identification information of a paging frame PF group of the terminal device, a paging frame offset, and a paging occasion index. The access network device sends the paging signal to the terminal device based on the NG-AP.

With reference to the third aspect, in some implementations of the third aspect, an interval between the third time and a first time is less than an interval between a second time and the first time, the second time is a receiving time of the paging signal before the paging signal is adjusted, and the first time is a receiving time of the reference signal.

According to the foregoing method, time in which the terminal device is paged can be reduced, to reduce energy consumption of the terminal device.

In addition, the interval between the third time and the first time may also be less than a first threshold. The first threshold may be set based on an actual service requirement. This is not limited in this application.

With reference to the third aspect, in some implementations of the third aspect, the first information further includes information about a capability of the terminal device for aligning a first signal with a second signal.

Received information indicating whether the terminal device supports alignment between the paging signal and the reference signal helps the access network device determine whether configuration information of the paging signal needs to be reconfigured for the terminal device.

With reference to the third aspect, in some implementations of the third aspect, that the access network device sends second information includes: The access network device receives third information of a location management network element, where the third information includes a time window for receiving the reference signal by the terminal device and a measurement reconfiguration request message. Alternatively, the access network device receives a measurement reconfiguration request (measurement reconfiguration request) message sent by a location management network element, where the measurement reconfiguration request message includes a second identifier, and the second identifier indicates that the measurement reconfiguration request message is used to trigger to reconfigure DRX configuration information of the terminal device. The access network device determines the second information based on the third information. The access network device sends the second information.

Specifically, not only the access network device may be requested, based on the first information sent by the terminal device, to send the second information, but also the access network device may be requested, based on the third information sent by the location management network element, to send the second information.

Specifically, the third information may be carried in the measurement reconfiguration request (measurement reconfiguration request) message.

With reference to the third aspect, in some implementations of the third aspect, the paging signal is the paging signal, and the reference signal is a positioning reference signal.

The positioning reference signal is aligned with the paging signal, so that energy consumption of the terminal device during positioning can be reduced.

According to a fourth aspect, a communication method is provided. The method may be performed by a location management network element, may be performed by a component (for example, a processor, a chip, or a chip system) of the location management network element, or may be implemented by a logical module or software that can implement all or some functions of the location management network element. The method includes: A location management network element sends third information to an access network device, where the third information includes a time window for receiving a reference signal by a terminal device and a measurement reconfiguration request message.

Alternatively, the location management network element sends a measurement reconfiguration request (measurement reconfiguration request) message to the access network device, where the measurement reconfiguration request message includes a second identifier, and the second identifier indicates that the measurement reconfiguration request message is used to trigger to reconfigure DRX configuration information of the terminal device.

In addition, the measurement reconfiguration request message may carry identifiers of a plurality of terminal devices.

Specifically, the location management network element may request the access network device to reconfigure configuration information of a paging signal for the terminal device, to enable the paging signal of the terminal device to be aligned with the reference signal.

According to a fifth aspect, a communication method is provided. The method may be performed by a location management network element, may be performed by a component (for example, a processor, a chip, or a chip system) of the location management network element, or may be implemented by a logical module or software that can implement all or some functions of the location management network element. The method includes: A location management network element receives fourth information, where the fourth information is used to request to adjust a receiving time of a reference signal. The location management network element sends fifth information, where the fifth information indicates a fifth time, and the fifth time is an adjusted receiving time of the reference signal.

Specifically, the "time" may represent an occasion (occasion), or may represent a time period, and may be determined based on a specific receiving status of a paging signal. This is not limited in this application. It should be noted that the "time" mentioned below may also be represented as an occasion (occasion) or a time period.

According to the foregoing method, the location management network element may flexibly configure the reference signal that is requested to be adjusted.

With reference to the fifth aspect, in some implementations of the fifth aspect, the fifth information includes information about the paging signal.

Specifically, the information about the paging signal includes at least one of the following information of the paging signal:

a discontinuous reception DRX cycle to which the paging signal belongs, a quantity of paging frame groups, identification information of a paging frame group, a paging frame offset, a paging frame index, a quantity of paging occasions, a paging occasion index, an identifier of a terminal device, and the like.

According to the foregoing method, the location management network element may adjust the receiving time of the reference signal based on the information about the paging signal, so that an adjusted receiving time of the reference signal is aligned with the receiving time of the paging signal as much as possible.

With reference to the fifth aspect, in some implementations of the fifth aspect, the fifth information further includes information about the reference signal.

Specifically, the information about the reference signal includes at least one of the following information of the reference signal:

an absolute radio frequency channel number (absolute radio frequency channel number, ARFCN), a sending time, a time domain offset (offset), a sending cycle (repetition), a measurement length (measurement length), a first offset, and the like. The first offset is determined based on the information about the paging signal.

According to the foregoing method, the location management network element adjusts the receiving time of the reference signal based on an adjustment value that is of the information about the reference signal and that is expected by the terminal device, so that the adjusted receiving time of the reference signal better meets a requirement of the terminal device for aligning the reference signal with the paging signal.

With reference to the fifth aspect, in some implementations of the fifth aspect, the fifth information further includes a reason for sending the fifth information.

For example, the reason why the terminal device sends the fifth information may be that reception of the paging signal is not aligned with reception of the reference signal.

With reference to the fifth aspect, in some implementations of the fifth aspect, an interval between the fifth time and a second time is less than an interval between a sixth time and a first time, the sixth time is a receiving time of the reference signal before the reference signal is adjusted, and the second time is the receiving time of the paging signal.

According to the foregoing method, time in which the terminal device is paged can be reduced, to reduce energy consumption of the terminal device.

In addition, the interval between the fifth time and the second time may also be less than a second threshold. The second threshold may be set based on an actual service requirement. This is not limited in this application.

With reference to the fifth aspect, in some implementations of the fifth aspect, that the location management network element sends fifth information includes: The location management network element sends sixth information to an access network device, where the sixth information is used to request the access network device to update configuration information of the reference signal. The location management network element receives seventh information of the access network device, where the seventh information indicates that the access network device allows updating the configuration information of the reference signal. The location management network element sends the fifth information.

When the location management network element configures new configuration information of the reference signal for the terminal device, the location management network element needs to request an access network device serving the terminal device and at least one other access network device to update sent configuration information of the reference signal.

With reference to the fifth aspect, in some implementations of the fifth aspect, the paging signal is the paging signal, and the reference signal is a positioning reference signal.

The positioning reference signal is aligned with the paging signal, so that energy consumption of the terminal device during positioning can be reduced.

According to a sixth aspect, a communication apparatus is provided. The apparatus may be a terminal device, may be a component (for example, a processor, a chip, or a chip system) of the terminal device, or may be a logical module or software that can implement all or some functions of the terminal device. The apparatus has a function of implementing the first aspect and the possible implementations of the first aspect. The function may be implemented by hardware, or may be implemented by hardware executing corresponding software. The hardware or the software includes one or more modules corresponding to the function.

In a possible design, the apparatus includes an interface unit and a processing unit. The interface unit may be at least one of a transceiver, a receiver, and a transmitter. The interface unit may include a radio frequency circuit or an antenna. The processing unit may be a processor. Optionally, the apparatus may further include a storage unit, and the storage unit may be, for example, a memory. When the apparatus includes a storage unit, the storage unit is configured to store a program or instructions. The processing unit is connected to the storage unit, and the processing unit may execute the program or the instructions stored in the storage unit or instructions from another source, to enable the apparatus to perform the communication method according to the first aspect and the possible implementations of the first aspect. In this design, the apparatus may be a terminal device.

In another possible design, when the apparatus is a chip, the chip includes an interface unit and a processing unit. The interface unit may be, for example, an input/output interface, a pin, or a circuit on the chip. The processing unit may be, for example, a processor. The processing unit may execute instructions, to enable the chip in the terminal device to perform the communication method according to any one of the first aspect and the possible implementations of the first aspect. Optionally, the processing unit may execute instructions in a storage unit, and the storage unit may be a storage module, for example, a register or a cache, in the chip. The storage unit may alternatively be located inside a communication device but outside the chip, for example, a read-only memory (read-only memory, ROM) or another type of static storage device that can store static information and instructions, or a random access memory (random access memory, RAM).

The processor mentioned anywhere above may be a general-purpose central processing unit (CPU), a microprocessor, an application-specific integrated circuit (application-specific integrated circuit, ASIC), or one or more integrated circuits configured to control program execution of the communication methods according to the foregoing aspects.

According to a seventh aspect, a communication apparatus is provided. The apparatus may be a mobility management network element, may be a component (for example, a processor, a chip, or a chip system) of the mobility management network element, or may be a logical module or software that can implement all or some functions of the mobility management network element. The apparatus has a function of implementing the second aspect and the possible implementations of the second aspect. The function may be implemented by hardware, or may be implemented by hardware executing corresponding software. The hardware or the software includes one or more modules corresponding to the function.

In a possible design, the apparatus includes an interface unit and a processing unit. The interface unit may be at least one of a transceiver, a receiver, and a transmitter. The interface unit may include a radio frequency circuit or an antenna. The processing unit may be a processor. Optionally, the apparatus may further include a storage unit, and the storage unit may be, for example, a memory. When the apparatus includes a storage unit, the storage unit is configured to store a program or instructions. The processing unit is connected to the storage unit, and the processing unit may execute the program or the instructions stored in the storage unit or instructions from another source, to enable the apparatus to perform the communication method according to the second aspect and the possible implementations of the second aspect. In this design, the apparatus may be a mobility management network element.

In another possible design, when the apparatus is a chip, the chip includes an interface unit and a processing unit. The interface unit may be, for example, an input/output interface, a pin, or a circuit on the chip. The processing unit may be, for example, a processor. The processing unit may execute the instructions, to enable a chip in the mobility management network element to perform the communication method according to any one of the second aspect and the possible implementations of the second aspect. Optionally, the processing unit may execute instructions in a storage unit, and the storage unit may be a storage module, for example, a register or a cache, in the chip. The storage unit may alternatively be located inside a communication device but outside the chip, for example, a read-only memory (read-only memory, ROM) or another type of static storage device that can store static information and instructions, or a random access memory (random access memory, RAM).

The processor mentioned anywhere above may be a general-purpose central processing unit (CPU), a microprocessor, an application-specific integrated circuit (application-specific integrated circuit, ASIC), or one or more integrated circuits configured to control program execution of the communication methods according to the foregoing aspects.

According to an eighth aspect, a communication apparatus is provided. The apparatus may be an access network device, may be a component (for example, a processor, a chip, or a chip system) of the access network device, or may be a logical module or software that can implement all or some functions of the access network device. The apparatus has a function of implementing the third aspect and the possible implementations of the third aspect. The function may be implemented by hardware, or may be implemented by hardware executing corresponding software. The hardware or the software includes one or more modules corresponding to the function.

In a possible design, the apparatus includes an interface unit and a processing unit. The interface unit may be at least one of a transceiver, a receiver, and a transmitter. The interface unit may include a radio frequency circuit or an antenna. The processing unit may be a processor. Optionally, the apparatus may further include a storage unit, and the storage unit may be, for example, a memory. When the apparatus includes a storage unit, the storage unit is configured to store a program or instructions. The processing unit is connected to the storage unit, and the processing unit may execute the program or the instructions stored in the storage unit or instructions from another source, to enable the apparatus to perform the communication method according to the third aspect and the possible implementations of the third aspect. In this design, the apparatus may be an access network device.

In another possible design, when the apparatus is a chip, the chip includes an interface unit and a processing unit. The interface unit may be, for example, an input/output interface, a pin, or a circuit on the chip. The processing unit may be, for example, a processor. The processing unit may execute instructions, to enable a chip in the access network device to perform the communication method according to any one of the third aspect and the possible implementations of the third aspect. Optionally, the processing unit may execute instructions in a storage unit, and the storage unit may be a storage module, for example, a register or a cache, in the chip. The storage unit may alternatively be located inside a communication device but outside the chip, for example, a read-only memory (read-only memory, ROM) or another type of static storage device that can store static information and instructions, or a random access memory (random access memory, RAM).

The processor mentioned anywhere above may be a general-purpose central processing unit (CPU), a microprocessor, an application-specific integrated circuit (application-specific integrated circuit, ASIC), or one or more integrated circuits configured to control program execution of the communication methods according to the foregoing aspects.

According to a ninth aspect, a communication apparatus is provided. The apparatus may be a location management network element, may be a component (for example, a processor, a chip, or a chip system) of the location management network element, or may be a logical module or software that can implement all or some functions of the location management network element. The apparatus has a function of implementing the fourth aspect, the fifth aspect, and the possible implementations of the fourth aspect and the fifth aspect. The function may be implemented by hardware, or may be implemented by hardware executing corresponding software. The hardware or the software includes one or more modules corresponding to the function.

In a possible design, the apparatus includes an interface unit and a processing unit. The interface unit may be at least one of a transceiver, a receiver, and a transmitter. The interface unit may include a radio frequency circuit or an antenna. The processing unit may be a processor. Optionally, the apparatus may further include a storage unit, and the storage unit may be, for example, a memory. When the apparatus includes a storage unit, the storage unit is configured to store a program or instructions. The processing unit is connected to the storage unit, and the processing unit may execute the program or the instructions stored in the storage unit or instructions from another source, to enable the apparatus to perform the communication method according to the fourth aspect, the fifth aspect, and the possible implementations of the fourth aspect and the fifth aspect. In this design, the apparatus may be a location management network element.

In another possible design, when the apparatus is a chip, the chip includes an interface unit and a processing unit. The interface unit may be, for example, an input/output interface, a pin, or a circuit on the chip. The processing unit may be, for example, a processor. The processing unit may execute instructions, to enable a chip in the location management network element to perform the communication method according to any one of the fourth aspect, the fifth aspect, and the possible implementations of the fourth aspect and the fifth aspect. Optionally, the processing unit may execute instructions in a storage unit, and the storage unit may be a storage module, for example, a register or a cache, in the chip. The storage unit may alternatively be located inside a communication device but outside the chip, for example, a read-only memory (read-only memory, ROM) or another type of static storage device that can store static information and instructions, or a random access memory (random access memory, RAM).

The processor mentioned anywhere above may be a general-purpose central processing unit (CPU), a microprocessor, an application-specific integrated circuit (application-specific integrated circuit, ASIC), or one or more integrated circuits configured to control program execution of the communication methods according to the foregoing aspects.

According to a tenth aspect, a computer storage medium is provided. The computer storage medium stores program code, and the program code indicates instructions for performing the method according to any one of the first aspect, the second aspect, the third aspect, the fourth aspect, the fifth aspect, and the possible implementations of the first aspect, the second aspect, the third aspect, the fourth aspect, and the fifth aspect.

According to an eleventh aspect, a computer program product including computer instructions or computer code is provided. When the computer program product is run on a computer, the computer is enabled to perform the method according to any one of the first aspect, the second aspect, the third aspect, the fourth aspect, the fifth aspect, and the possible implementations of the first aspect, the second aspect, the third aspect, the fourth aspect, and the fifth aspect.

According to a twelfth aspect, a communication system is provided. The communication system includes an apparatus that has a function of implementing the methods and the possible designs of the first aspect, an apparatus that has a function of implementing the methods and the possible designs of the second aspect, an apparatus that has a function of implementing the methods and the possible designs of the third aspect, an apparatus that has a function of implementing the methods and the possible designs of the fourth aspect, and an apparatus that has a function of implementing the methods and the possible designs of the fifth aspect. The apparatus that has the function of implementing the first aspect and the possible designs of the first aspect may be a terminal device, the apparatus that has the function of implementing the methods and the possible designs of the second aspect may be a mobility management network element, the apparatus that has the function of implementing the methods and the possible designs of the third aspect may be an access network device, and the apparatus that has the function of implementing the methods and the possible designs of the fourth aspect and the fifth aspect may be a location management network element.

Specifically, for advantageous effects of other aspects, refer to the advantageous effects described in the first aspect, the second aspect, the third aspect, the fourth aspect, and the fifth aspect.

Based on the foregoing technical solution, not only energy consumption of a terminal device can be reduced, but also a paging signal and a reference signal of the terminal device can be flexibly configured.

## BRIEF DESCRIPTION OF DRAWINGS

FIG. 1 is a diagram of a network architecture 100 according to this application;

FIG. 2 is a diagram of receiving a paging signal in DRX according to this application;

FIG. 3 is a diagram of a method for implementing alignment between a PRS and DRX according to this application;

FIG. 4 is a diagram of another method for implementing alignment between a PRS and DRX according to this application;

FIG. 5 is a diagram of aligning a PRS with DRX according to this application;

FIG. 6A and FIG. 6B are a diagram of still another method for implementing alignment between a PRS and DRX according to this application;

FIG. 7 is a block diagram of an information sending apparatus 100 according to this application; and

FIG. 8 is a block diagram of an information receiving apparatus 200 according to this application.

## DESCRIPTION OF EMBODIMENTS

The following describes technical solutions of this application with reference to accompanying drawings.

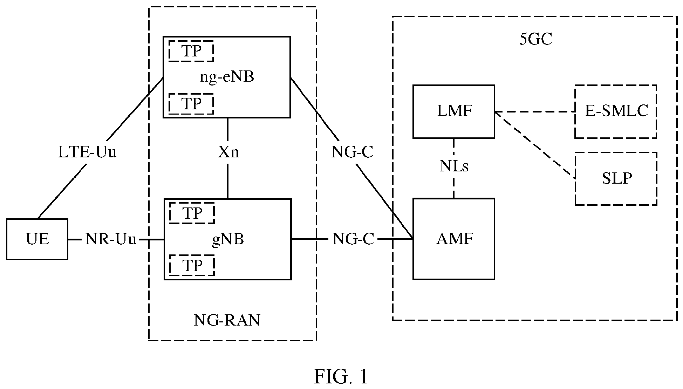

FIG. 1 shows an example of an architecture of a communication system 100 applicable to an embodiment of this application. As shown in FIG. 1, the communication system 100 includes a core network, a radio access network (radio access network, RAN), and a terminal device (user equipment, UE). The core network includes functions such as an access and mobility management function (access and mobility management function, AMF), a location management function (location management function, LMF), unified data management (unified data management, UDM), a gateway mobile location center (gateway mobile location center, GMLC), and a location retrieval function (location retrieval function, LRF). An NG-RAN includes one or more ng-eNBs and gNBs. The ng-eNB is a long term evolution (long term evolution, LTE) base station that accesses a 5G core network, and the gNB is a 5G base station that accesses the 5G core network. For example, the communication system 100 may further include one or more terminal devices. The NG-RAN is connected to the core network via the AMF through an NG-C interface. A terminal is connected to the RAN via the ng-eNB and the gNB through an LTE-Uu and an NR-Uu, respectively.

In addition, the core network to which this application is applied may further include an evolved serving mobile location center (evolved serving mobile location center, E-SMLC) and the like.

In addition, it should be understood that names of interfaces between network elements shown in FIG. 1 are merely used as examples. In different communication systems, or with evolution of a communication system, the interfaces between the network elements shown in FIG. 1 may be different from those shown in FIG. 1. This is not limited in this specification.

A radio access network (radio access network, RAN) device mentioned in this application is an apparatus that is deployed in the RAN, that meets a 5G standard or a next-generation communication standard, and that provides a wireless communication function for a terminal device. The radio access network (radio access network, RAN) device is a network including a plurality of 5G-RAN nodes, and implements functions of a radio physical layer, resource scheduling and radio resource management, quality of service management, data compression and encryption, radio access control, and mobility management. The 5G-RAN is connected to a user plane function (user plane function, UPF) network element through a user plane interface N3, to transmit data of the terminal device. The 5G-RAN establishes a control plane signaling connection to an access and mobility management function (access and mobility management function, AMF) network element through a control plane interface N2, to implement functions such as radio access bearer control. The RAN may be any device with a wireless transceiver function, including but not limited to a 5G base station (5G node base, gNB), an evolved NodeB (evolved node base, eNB), a wireless access point (wireless access point, Wi-Fi AP), a world interoperability for microwave access base station (world interoperability for microwave access base station, WiMAX BS), a transmission reception point (transmission reception point, TRP), a wireless relay node, a wireless backhaul node, or the like.

An access network device in embodiments of this application may alternatively be a device configured to communicate with the terminal device. The access network device may be an evolved NodeB (evolved node base, eNB) in an LTE system, or may be a radio controller in a cloud radio access network (cloud radio access network, CRAN) scenario. Alternatively, the access network device may be a relay station, an access point, a vehicle-mounted device, a wearable device, an access network device in a future 5G network, an access network device in a future evolved PLMN network, or the like. This is not limited in embodiments of this application.

In NR, functions of a base station are divided into two parts, which is referred to as central unit (central unit, CU)-distributed unit (distributed unit, DU) separation. From a perspective of a protocol stack, a CU includes an RRC layer and a PDCP layer of an LTE base station, and a DU includes a radio link control (radio link control, RLC) layer, a medium access control (medium access control, MAC) layer, and a physical (physical, PHY) layer of the LTE base station. In common 5G base station deployment, the CU and the DU may be physically connected through an optical fiber, and logically there is a specially defined F1 interface used for communication between the CU and the DU. From a perspective of a function, the CU is mainly responsible for radio resource control and configuration, inter-cell mobility management, bearer management, and the like. The DU is mainly responsible for scheduling and physical signal generation and sending.

The base station may be a macro base station, a micro base station, a pico base station, a small cell, a relay station, a balloon station, or the like.

The access and mobility management function (access and mobility management function, AMF) belongs to a core network element, and is mainly responsible for signaling processing, for example, functions such as access control, mobility management, attachment and detachment, and gateway selection. When providing a service for a session of the terminal device, the AMF network element provides a control plane storage resource for the session, to store a session identifier and a session management network element (session management function, SMF) network element identifier associated with the session identifier. In addition, the AMF network element is further responsible for transferring a user policy between the terminal device and a policy control function (policy control function, PCF).

The terminal device in this embodiment of this application may alternatively be a mobile phone (mobile phone), a tablet computer (pad), a computer having a wireless transceiver function, a holographic projector, a video player, a virtual reality (virtual reality, VR) terminal, an augmented reality (augmented reality, AR) terminal, a wireless terminal in industrial control (industrial control), a tactile terminal device, a vehicle-mounted terminal device, a road side unit (road side unit, RSU), a wireless terminal in self driving (self driving), a communication terminal in an uncrewed aerial vehicle, a wireless terminal in telemedicine (remote medical), a wireless terminal in a smart grid (smart grid), a wireless terminal in transportation safety (transportation safety), a wireless terminal in transportation safety, a wireless terminal in a smart city (smart city), a wireless terminal in smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal in a 5G network, a terminal in a future evolved network, or the like.

The wearable device may also be referred to as a wearable intelligent device, and is a generic term for wearable devices such as head-mounted display XR glasses, gloves, watches, clothes, and shoes that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, for example, smart watches or smart glasses, and include devices that dedicated to one type of application function and need to collaboratively work with other devices such as smartphones, for example, various smart bands, or smart jewelry for monitoring physical signs.

The terminal device in this embodiment of this application is connected to a RAN device in a wireless manner, and the RAN device is connected to a 5G core network device in a wireless or wired manner. The 5G core network device and the RAN device may be different physical devices that are independent of each other, or functions of the 5G core network device and logical functions of the RAN device may be integrated into a same physical device, or a part of functions of the 5G core network device and a part of functions of the RAN device may be integrated into one physical device. The terminal device may be located at a fixed position, or may be mobile.

It should be noted that the foregoing "network element" may also be referred to as an entity, a device, an apparatus, a module, or the like. This is not particularly limited in this application. In addition, in this application, for ease of understanding and description, the description of the "network element" is omitted in some descriptions. For example, an AMF network element is briefly referred to as an AMF. In this case, the "AMF" should be understood as an AMF network element or an AMF entity. Same or similar cases are not described below.

It should be noted that a name of each network element included in FIG. 1 is merely a name, and the name does not limit a function of the network element. In the 5G network and another future network, the foregoing network elements may alternatively have other names. This is not specifically limited in embodiments of this application. For example, in a 6G network, some or all of the foregoing network elements may still use terms in 5G, or may have other names. General descriptions are provided herein. Details are not described again below.

It should be noted that the network elements in FIG. 1 do not necessarily exist simultaneously, and required network elements may be determined based on a requirement. A connection relationship between the network elements in FIG. 1 is not uniquely determined, and may be adjusted based on a requirement.

It may be understood that the foregoing network elements or functions may be network elements in a hardware device, may be software functions running on dedicated hardware, or may be virtualized functions instantiated on a platform (for example, a cloud platform).

To reduce power consumption of a terminal device in a radio resource control_idle (radio resource control_idle, RRC_IDLE) state or a radio resource control_inactive (RRC_INACTIVE) state, the terminal device receives a paging signal in a discontinuous reception (discontinuous reception, DRX) manner. One DRX cycle (cycle) includes at least one paging frame (paging frame, PF). One PF corresponds to at least one paging occasion (paging occasion, PO). The terminal device needs to wake up only once in one DRX cycle to monitor one PO. In addition, the DRX cycle represents a cycle in which the terminal device detects paging, the PF represents a system frame in which the terminal device detects paging, and the PO represents a specific PDCCH monitoring occasion (monitoring occasion) on which the terminal device detects paging.

The terminal device may calculate and determine locations of the PF and the PO according to related formulas. For example,

$$\text{PF: } (SFN + PF\_offset) \bmod T = (T \text{ div } N) * (UE\_ID \bmod N) \quad \text{Formula 1}$$

$$i\_s: \text{floor}(UE\_ID/N) \bmod NS = 0 \quad \text{Formula 2}$$

SFN represents a system frame number (system frame number, SFN). T represents the DRX cycle. Generally, system information includes cell-level Tc, and may also include UE-level TUE. If no TUE is indicated, T=TUE. If TUE is indicated, T=min{Tc, TUE}. N represents a total quantity of PFs in T. NS represents a quantity of POs corresponding to one PF. PF_ offset represents a PF offset. UE_ID represents a remainder of an international mobile subscriber identifier (international mobile subscriber identifier, IMSI) of the UE mod 1024, where mod is a modulo operation. floor represents a function for rounding down. i_s represents an index (index) of the PO corresponding to the PF.

Specifically, for a terminal device in a connected state, the access network device may broadcast paging-related configuration information by using paging control channel (paging control channel, PCCH)-configuration (configuration, Config) information in a system information block (system information block, SIB). For example, the paging-related configuration information may include a paging cycle (DRX cycle), an offset of the PF in the paging cycle, and a start location of the PO. The terminal device determines, based on the configuration information and identification information of the terminal device, a corresponding PO in each paging cycle. For example, for content of the configuration information, refer to Table 1.

Table 1

| IMSI | 404685505601234 |
|---|---|
| Tc | 128 |
| TUE | 32 |
| T | T=min{Tc, TUE}=32 |
| nB | =T/2=16 |
| UE_ID | IMSI mod 1024=722 |
| N | N=min{T, nB}=16 |
| NS | NS=max{1, nB/T}=1 |
| i_s | i_s=floor (UE_ID/N) mod NS=0 |
| PF | SFN mod T=(T div N)*(UE _ID mod N); and PF: SFN mod 32=4 |

(continued)

| PO | Based on NS and i_s, it can be learned from the table that a subframe number is 9. |

Specifically, the terminal device may configure the PO in two manners. In a first manner, a receiving time of the PO is configured to be the same as a receiving time of a system information block 1 (system information block, SIB1). If a synchronization signal (synchronization signal, SS) of the SIB1 and a synchronization signal block (synchronization signal block, SSB) are in frequency division multiplexing (frequency division multiplexing, FDM), the SIB1, the SSB, and a PO for paging can be received at the same time. If an SS cycle is the same as an SSB cycle, and the SS cycle is increased, a quantity of PFs that can be configured in each DRX is decreased. If the SS and the SSB are in time division multiplexing (time division multiplexing, TDM), the SS cycle is fixed. In a second manner, the PO is separately configured. The PO can be configured by using PagingSearchSpace. Alternatively, a first PDCCH monitoring occasion may be configured by using firstPDCCH-MonitoringOccasionOfPO, and a specific quantity of PDCCH monitoring occasions corresponding to each SSB is configured by using nrofPDCCH-MonitoringOccasionPerSSB-InPO. Each SSB corresponds to one PDCCH monitoring occasion, and each PO corresponds to one beam sweeping.

It can be learned from the content shown in Table 1 that, the terminal device needs to wake up once at an interval of 320 ms (T* 10 ms) and attempt to receive the paging signal. In the DRX cycle, one PF in every two system frames (N=16) may be used to send the paging signal. Different terminal devices may select, based on different UE_IDs of the terminal devices, a corresponding PO from 16 POs in the DRX cycle to receive the paging signal.

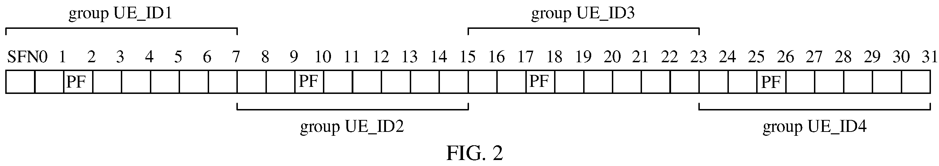

In addition, a plurality of different terminal devices may further select, based on identifiers (group UE_IDs) of a plurality of different terminal device groups, corresponding POs from N POs in one DRX cycle to receive the paging signal, as shown in FIG. 2.

A length T of one DRX cycle shown in FIG. 2 is 32, a quantity N of PFs is 4, and PF_offset=6. A plurality of terminal devices belonging to a terminal device group 1 (group UE_ID1) may receive a paging signal when SFN=2, a plurality of terminal devices belonging to a terminal device group 2 (group UE_ID2) may receive the paging signal when SFN=10, a plurality of terminal devices belonging to a terminal device group 3 (group UE_ID3) may receive the paging signal when SFN=18, and a plurality of terminal devices belonging to a terminal device group 4 (group UE_ID4) may receive the paging signal when SFN=26.

In addition, for a terminal device in RRC_INACTIVE, an access network device may deliver the foregoing paging-related configuration information in an RRC release (RRC release) message.

In addition, for a terminal device in RRC_IDLE, a core network may send the foregoing paging-related configuration information to the terminal device in a non-access stratum (non-access stratum, NAS) negotiation manner. For example, the paging-related configuration information may be delivered by using a registration request (registration request) message or a registration accept (registration accept) message.

In one DRX cycle, other reference signals may further be received, for example, a positioning reference signal (positioning reference signal, PRS) used for positioning. The terminal device needs to be paged before each of the other reference signals is received. Therefore, power consumption of the terminal device increases.

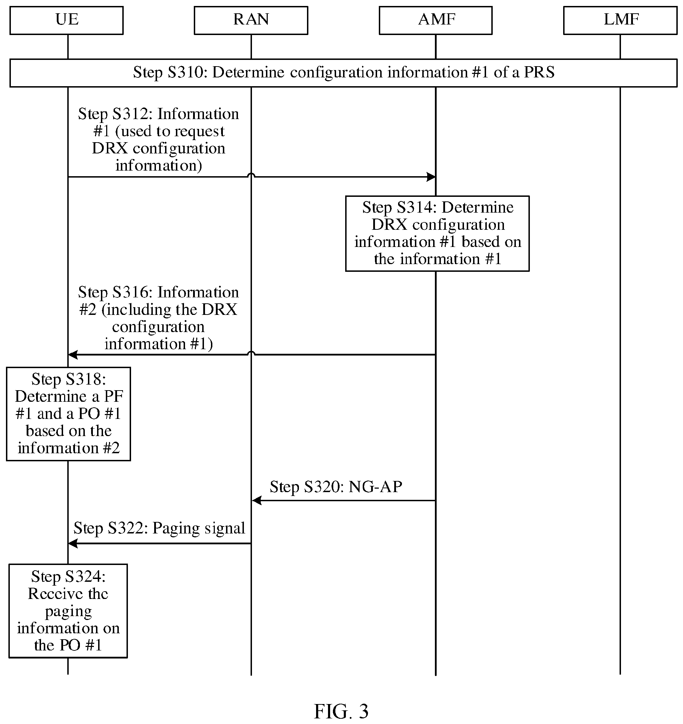

This application provides a manner of reducing energy consumption of a terminal device, as shown in FIG. 3.

The following describes in detail technical solutions of this application by using a UE as an example of the terminal device.

It should be noted that, a UE ID, group UE_ID, and a globally unique temporary terminal device identity (globally unique temporary UE identity, GUTI) used in this application may all identify a UE, where the GUTI may be further used to page the UE, or the GUTI may be an identifier specially used by the UE to align a PRS with a paging signal.

Step S310: The UE in a connected state determines configuration information #1 of the PRS with an LMF.

Specifically, the UE and the LMF may determine the configuration information #1 of the PRS by using an LTE positioning protocol (LTE positioning protocol, LPP).

Specifically, configuration parameters of the configuration information #1 of the PRS may include but are not limited to the following parameters:

a PRS sending time, a PRS time domain offset (offset), a PRS sending cycle (repetition), a PRS measurement length (measurement length), and the like.

Specifically, the PRS sending cycle (repetition) may refer to a length of a time interval between two consecutive transmissions of a same PRS.

In this application, the PRS may be periodically sent. To be specific, each sending cycle may include a sending time period and a non-sending time period, and a RAN may send the PRS in the sending time period, and does not send the PRS in the non-sending time period.

Specifically, the PRS time domain offset (offset) may refer to an offset of a start moment of the PRS sending cycle relative to a preset reference moment. For example, a time domain position offset of the PRS may indicate a start time unit (for example, a start subframe) of the PRS sending cycle.

It should be noted that a communication system may be divided into a plurality of system cycles in time domain, and the time domain position offset of the PRS may refer to an offset of a start moment of a 1st sending time period of the PRS relative to a start moment of a system cycle in which the start moment is located. In other words, the preset reference moment may refer to a start moment of a system cycle in which the 1st sending time period of the PRS is located.

Alternatively, the time domain position offset of the PRS may refer to an offset of a sending time period of the PRS in each cycle relative to a start moment of the sending cycle. For example, the time domain position offset of the PRS may refer to a sequence number of a time unit corresponding to a sending time period of the PRS in each cycle in a plurality of time units included in the sending cycle.

Specifically, a positioning method for performing positioning by using the PRS includes one or more LTE positioning protocol (LTE positioning protocol, LPP) positioning methods and/or NR positioning protocol A (NR positioning protocol A, NRPPa) positioning methods, and the like.

Specifically, the LPP positioning method may include one or more of the following positioning methods: a downlink time difference of arrival (downlink time difference of arrival, DL-TDOA) positioning method, a downlink angle of departure (downlink angle of departure, DL-AOD) positioning method, a multi-station-round-trip latency (multi-round-trip time, Multi-RTT) positioning method, an enhanced cell identification (enhanced cell identification, E-CID) positioning method, an uplink time difference of arrival (uplink time difference of arrival, UL-TDOA) positioning method, an uplink angle of arrival (uplink angle of arrival, UL-AoA) positioning method, an assisted global navigation satellite system (assisted global navigation satellite system, A-GNSS) positioning method, a sensor (sensor) positioning method, a wireless local area network (wireless local area network, WLAN) positioning method, a Bluetooth (Bluetooth) positioning method, a terrestrial beacon system (terrestrial beacon system, TBS) positioning method, and the like.

Specifically, the NRPPa positioning method may include one or more of the following positioning methods: an NR enhanced cell identification (NR enhanced cell identification, NR E-CID) positioning method, an observed time difference of arrival (observed time difference of arrival, OTDOA) positioning method, and the like.

Step S312: The UE sends information #1 to an AMF. Correspondingly, the AMF receives the information #1 sent by the UE.

Specifically, the UE may send the information #1 to the AMF when the following two conditions are met:

1. The UE has a capability of aligning the PRS with the paging signal, or the UE supports aligning the PRS with the paging signal.

2. When a time interval between the paging signal and the PRS is greater than a threshold #1, the threshold #1 may be flexibly set. This is not limited in this application.

Specifically, an LPP layer of the UE may indicate a NAS layer to request the information # 1.

Specifically, the information #1 is used to request DRX configuration information. The DRX configuration information is used by the UE to determine a PF #1 and a PO #1, and monitor the paging signal on the determined new PO #1.

Specifically, the information #1 may be location measurement indication (LocationMeasurementIndication) information triggered by the UE, or the information #1 may be carried in location measurement indication (LocationMeasurementIndication) information triggered by the UE.

Information included in the information #1 may be classified into the following three cases.

In a first case, the information #1 includes information about the PRS, and the information about the PRS included in the information #1 may be the configuration information #1 of the PRS, or may be different from the configuration information #1 of the PRS. Specifically, the information about the PRS may include at least one of the following information: a PRS absolute radio frequency channel number (absolute radio frequency channel number, ARFCN), the PRS sending time, the PRS time domain offset (offset), the PRS sending cycle (repetition), the PRS measurement length (measurement length), and the like.

In a second case, the information #1 may further include at least one of the following information of the paging signal: at least one of a current DRX cycle to which the paging signal belongs, a quantity N of PF groups in the current DRX cycle, a PF group ID in the current DRX cycle, PF_offset in the current DRX cycle, an index of a PF in the current DRX cycle, a quantity NS of POs in the current DRX cycle, an index (i_s) of a PO in the current DRX cycle, an expected adjustment value of PF_offset in the DRX cycle, an expected adjustment value of the PO in the DRX cycle, an adjustment value of a 5G globally unique temporary terminal device identity (globally unique temporary UE identity, GUTI), a 5G-GUTI used for paging the UE, an adjustment value of the 5G-GUTI used for paging the UE, and the like. The expected adjustment value of PF_offset in the DRX cycle may be a value that is of a time domain offset of the PF and that is expected by the UE. The adjustment value may be a specific value, or may be an expected range. Similarly, the expected adjustment value of the PO in the DRX cycle may be a value that is of a time domain offset of the PO and that is expected by the UE. The adjustment value may be a specific value, or may be an expected range. The 5G-GUTI is an identifier of the UE that is specially used by the UE to align the PRS with the paging signal. The UE may determine, based on a new 5G-GUTI, a receiving time of the paging signal. This is not limited in this application.

Specifically, the at least one piece of information of the paging signal may be combined in the following several manners.

A manner 1 is the quantity N of PF groups in the current DRX cycle, the quantity NS of POs in the current DRX cycle, PF_offset in the current DRX cycle, the index of the PF in the current DRX cycle, and the index (i_s) of the PO in the current DRX cycle.

A manner 2 is the quantity N of PF groups in the current DRX cycle, the quantity NS of POs in the current DRX cycle, the expected adjustment value of the PO in the DRX cycle, and the expected adjustment value of PF_offset in the DRX cycle.

A manner 3 is PF_offset in the current DRX cycle and the 5 G-GUTI used for paging the UE.

A manner 4 is PF_offset in the current DRX cycle and the adjustment value of the 5G-GUTI used for paging the UE.

The information #1 may carry information included in at least one of the manner 1, the manner 2, the manner 3, and the manner 4. In a third case, the information #1 may include information about a validity area (per PRS validity area) of the PRS.

Specifically, the information about the validity area may be an identifier of the area, a cell list of cells included in the area, or the like. In other words, the UE may request the AMF to configure new DRX configuration information for the validity area.

It should be noted that the information #1 may include information included in at least one of the foregoing three cases.

Step S314: The AMF determines DRX configuration information #1 based on the received information #1.

Specifically, the DRX configuration information #1 may include at least one of a DRX cycle, a quantity N of PF groups in the DRX cycle, a PF group ID in the DRX cycle, PF_offset in the DRX cycle, an index of a PF in the DRX cycle, a quantity NS of POs in the DRX cycle, an index (i_s) of a PO in the DRX cycle, an adjustment value of PF_offset in the DRX cycle, an adjustment value of the PO in the DRX cycle, an adjustment value of a 5G globally unique temporary terminal device identity (globally unique temporary UE identity, GUTI), a 5G-GUTI used for paging the UE, an adjustment value of the 5G-GUTI used for paging the UE, and the like.

Step S316: The AMF sends information #2 to the UE. Correspondingly, the UE receives the information #2.

Specifically, the information #2 includes the DRX configuration information #1.

Specifically, the DRX configuration information #1 included in the information #2 may be combined in the following several manners.

A manner 1 is the quantity N of PF groups in the DRX cycle, the quantity NS of POs in the DRX cycle, PF_offset in the DRX cycle, the index of the PF in the DRX cycle, and the index (i_s) of the PO in the DRX cycle.

A manner 2 is the quantity N of PF groups in the DRX cycle, the quantity NS of POs in the DRX cycle, the adjustment value of the PO in the DRX cycle, and the adjustment value of PF_offset in the DRX cycle.

A manner 3 is PF_offset in the DRX cycle and a new 5G-GUTI used for paging the UE.

A manner 4 is PF_offset in the DRX cycle and an adjustment value of the new 5G-GUTI used for paging the UE.

The DRX configuration information #1 may carry information included in at least one of the manner 1, the manner 2, the manner 3, and the manner 4.

Optionally, the information #2 may include the information about the validity area (per PRS validity area) of the PRS.

Specifically, the information about the validity area may be the identifier of the area, the cell list of cells included in the area, or the like. In other words, the DRX configuration information #1 is applicable to the validity area of the PRS.

Optionally, the UE may also indicate, by using the LPP layer, the NAS layer to receive the information #2.

Step S318: After entering RRC_IDLE, the UE determines the PF #1 and the PO #1 based on the information #2.

Specifically, the UE may further determine PF_offset based on the information #2.

Specifically, the UE determines the PF #1 and the PO #1 based on the information #2, the formula 1, and the formula 2.

Specifically, if the AMF indicates group UE_ID to the UE, the UE determines the PF #1 and the PO #1 based on group UE_ID.

Specifically, if the AMF indicates UE_ID to the UE, the UE determines the PF #1 and the PO #1 based on UE_ID.

Optionally, the DRX configuration information #1 may be further determined based on the validity area (per PRS validity area) of the PRS, to further determine the PF #1 and the PO #1. In other words, the validity area (per PRS validity area) of the PRS may be determined based on a cell on which the UE camps, to further determine the DRX configuration information #1, the PF #1, and the PO #1.

Step S320: When downlink signaling or data arrives, the AMF sends an NG interface application protocol (NG application protocol, NG-AP) to the RAN.

Specifically, if the AMF does not send paging-related UE_ID or group UE_ID of the PRS to a related UE or group UE in step S316, the AMF may include, in the NG-AP sent to the RAN in step S320, at least one of a UE PF group ID, a PO ID, PF_offset, a UE ID, and the like that are specially used for alignment between the PRS and the paging signal. Step S322: The RAN sends the paging signal to the UE based on the NG-AP sent by the AMF.

Specifically, the RAN may send the paging signal to the UE by using an RRC message.

Step S324: The UE receives the paging signal on the PO #1.

According to the foregoing method, it can be implemented that reception of the paging signal is aligned with reception of the PRS in DRX of a UE in RRC_IDLE, to further reduce energy consumption of the UE.

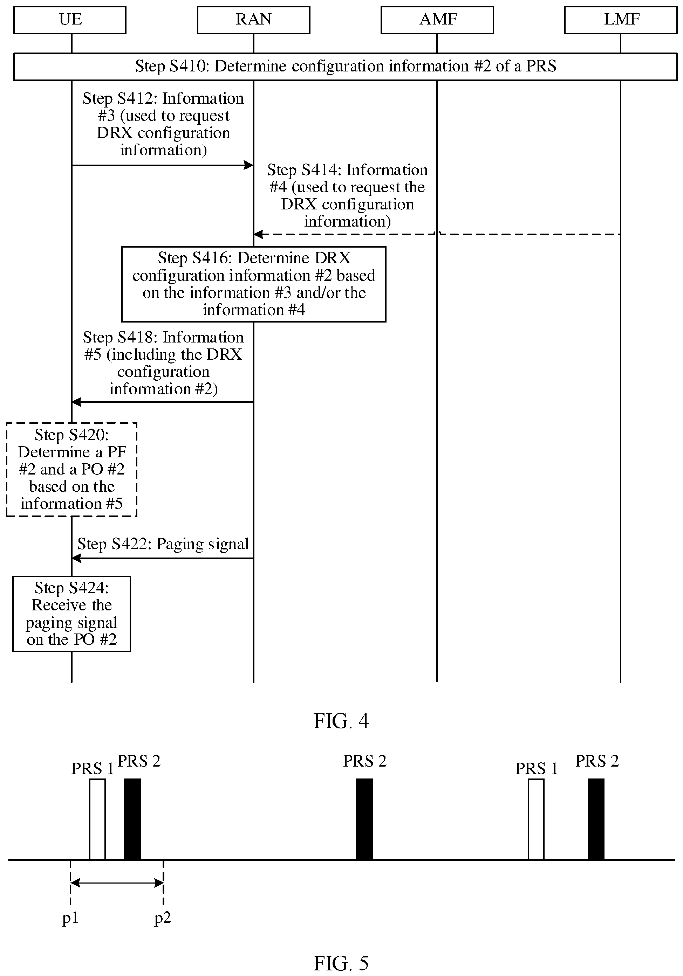

The above solution is a solution of alignment between the DRX and the reception of the PRS when the UE is in RRC_IDLE, and the following provides a solution of alignment between the DRX and the reception of the PRS when the UE is in RRC_INACTIVE, as shown in FIG. 4.

Step S410: A UE in a connected state determines configuration information #2 of a PRS with an LMF.

Specifically, the UE and the LMF may determine the configuration information #2 of the PRS by using an LPP.

Specifically, configuration parameters of the configuration information #2 of the PRS may include but are not limited to the following parameters:

at least one of a PRS sending time, a PRS time domain offset (offset), a PRS sending cycle (repetition), a PRS measurement length (measurement length), and the like.

Specifically, the PRS sending cycle may refer to a length of a time interval between two consecutive transmissions of a same PRS.

In this application, the PRS may be periodically sent. To be specific, each sending cycle may include a sending time period and a non-sending time period, and a RAN may send the PRS in the sending time period, and does not send the PRS in the non-sending time period.

Specifically, the PRS time domain offset (offset) may refer to an offset of a start moment of the PRS sending cycle relative to a preset reference moment. For example, a time domain position offset of the PRS may indicate a start time unit (for example, a start subframe) of the PRS sending cycle.

It should be noted that a communication system may be divided into a plurality of system cycles in time domain, and the time domain position offset of the PRS may refer to an offset of a start moment of a $1^{st}$ sending time period of the PRS relative to a start moment of a system cycle in which the start moment is located. In other words, the preset reference moment may refer to a start moment of a system cycle in which the $1^{st}$ sending time period of the PRS is located.

Alternatively, the time domain position offset of the PRS may refer to an offset of a sending time period of the PRS in each cycle relative to a start moment of the sending cycle. For example, the time domain position offset of the PRS may refer to a sequence number of a time unit corresponding to a sending time period of the PRS in each cycle in a plurality of time units included in the sending cycle.

Specifically, a positioning method for performing positioning by using the PRS includes one or more LPP positioning methods and/or NRPPa positioning methods, and the like.

Specifically, the LPP positioning method may include one or more of the following positioning methods:

a DL-TDOA, a DL-AOD, a Multi-RTT, E-CID, a UL-TDOA, a UL-AoA, an A-GNSS, a sensor, a WLAN, Bluetooth, a TBS, and the like.

Specifically, the NRPPa positioning method may include one or more of the following positioning methods:

NR E-CID, an OTDOA, and the like.

Step S412: The UE sends information #3 to the RAN. Correspondingly, the RAN receives the information #3 sent by the UE.

Specifically, the information #3 is used to request DRX configuration information. The DRX configuration information is used by the UE to determine a PF #2 and a PO #2, and monitor a paging signal on the determined new PO #2.

Specifically, the information #3 may be carried in a location measurement indication (LocationMeasurementIndication) message triggered by the UE. This message is used to request inactive DRX (INACTIVE DRX) configuration information.

In addition, the location measurement indication information may include a first identifier, and the first identifier indicates that the location measurement indication information is used to request the inactive DRX (INACTIVE DRX) configuration information. The first identifier may be one bit or the like. This is not limited in this application.

Alternatively, the information #3 may be carried in a designed new RRC message or terminal assistant message (user assistant information, UAI).

Specifically, information included in the information #3 may be classified into the following three cases.

In a first case, the information #3 may include information about the PRS, and the information about the PRS may be the configuration information #2 of the PRS, or may be different from the configuration information #2 of the PRS.

The information about the PRS may include at least one of the following information:

at least one of an ARFCN of the PRS, the PRS sending time, the PRS time domain offset (offset), the PRS sending cycle (repetition), the PRS measurement length (measurement length), and the like.

In a second case, the information #3 may further include at least one of the following information of the paging signal:

at least one of a current DRX cycle to which the paging signal belongs, a quantity N of PF groups in the current DRX cycle, a PF group ID in the current DRX cycle, PF_offset in the current DRX cycle, an index of a PF in the current DRX cycle, a quantity NS of POs in the current DRX cycle, an index (i_s) of a PO in the current DRX cycle, an expected adjustment value of PF_offset in the DRX cycle, an expected adjustment value of the PO in the DRX cycle, a first time window, and the like. The expected adjustment value of PF_offset in the DRX cycle may be a value that is of a time domain offset of the PF and that is expected by the UE. The adjustment value may be a specific value, or may be an expected range. Similarly, the expected adjustment value of the PO in the DRX cycle may be a value that is of a time domain offset of the PO and that is expected by the UE. The adjustment value may be a specific value, or may be an expected range. The first time window is a time window in which the paging signal can be received as expected by the UE.

For example, reception of a PRS 1 and a PRS 2 is shown in FIG. 5, and the UE expects to receive the paging signal in a first time window [p1, p2] based on the reception of the PRS 1 and the PRS 2. A length of the time window [p1, p2] may be adjusted based on an actual requirement. This is not limited in this application.

In a third case, the information #3 may include information about a validity area (per PRS validity area) of the PRS.

Specifically, the information about the validity area may be an identifier of the area, a cell list of cells included in the area, or the like. In other words, the UE may request the RAN to configure new DRX configuration information for the validity area.

It should be noted that the information #3 may include information included in at least one of the foregoing three cases.

Optionally, in step S414, the LMF sends information #4 to the RAN. Correspondingly, the RAN receives the information #4.

Specifically, the information #4 is also used to request the DRX configuration information. The LMF may send the information #4 to the RAN based on the configuration information #2 of the PRS and a capability of low power high accuracy positioning (low power high accuracy positioning, LPHAP) of the UE.

Specifically, the information #4 may be a measurement reconfiguration request (measurement reconfiguration request) message in an NRPPa message triggered by the LMF. The measurement reconfiguration request message may include a second identifier, and the second identifier indicates that the measurement reconfiguration request message is used to trigger to reconfigure the DRX configuration information of the UE.

Optionally, the information #4 or the measurement reconfiguration request message may include information such as the configuration information #2 (PRS configuration) of the PRS currently used by the UE, and a time window in which the UE receives the PRS.

Optionally, the information #4 may further include IDs of a plurality of UEs.

Step S416: The RAN determines the DRX configuration information #2 based on the information #3 and/or the information #4.

Specifically, configuration parameters of the DRX configuration information #2 include at least one of a DRX cycle to which the paging signal belongs, a quantity N of PF groups in the DRX cycle, a PF group ID in the DRX cycle, PF_offset in an adjusted DRX cycle, an index of a PF in the DRX cycle, a quantity NS of POs in the DRX cycle, an index (i_s) of a PO in the DRX cycle, an adjustment value of PF_offset in the DRX cycle, an adjustment value of the PO in the DRX cycle, and the like.

Step S418: The RAN sends information #5 to the UE. Correspondingly, the UE receives the information #5.

Specifically, the information #5 may be carried in an RRC release message. The information #5 may include the DRX configuration information #2.

Step S420: The UE may determine the PF #2 and the PO #2 based on the information #5.

Optionally, the DRX configuration information #2 is applicable to the validity area of the PRS.

Step S422: The RAN sends the paging signal to the UE. The UE receives the paging signal by using the PF #2 and the PO #2.

According to the foregoing method, it can be implemented that reception of the paging signal is aligned with reception of the PRS in DRX of a UE in RRC_INACTIVE, to further reduce the energy consumption of the UE.

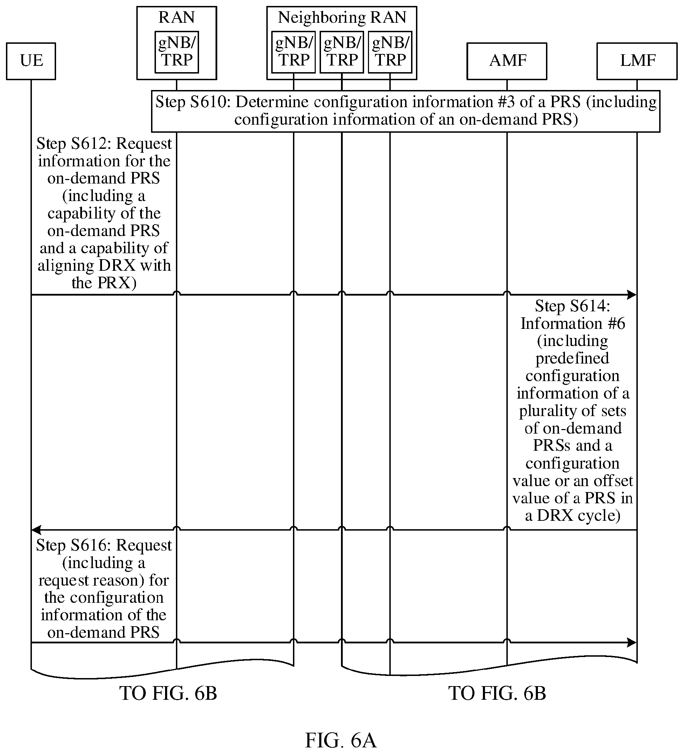

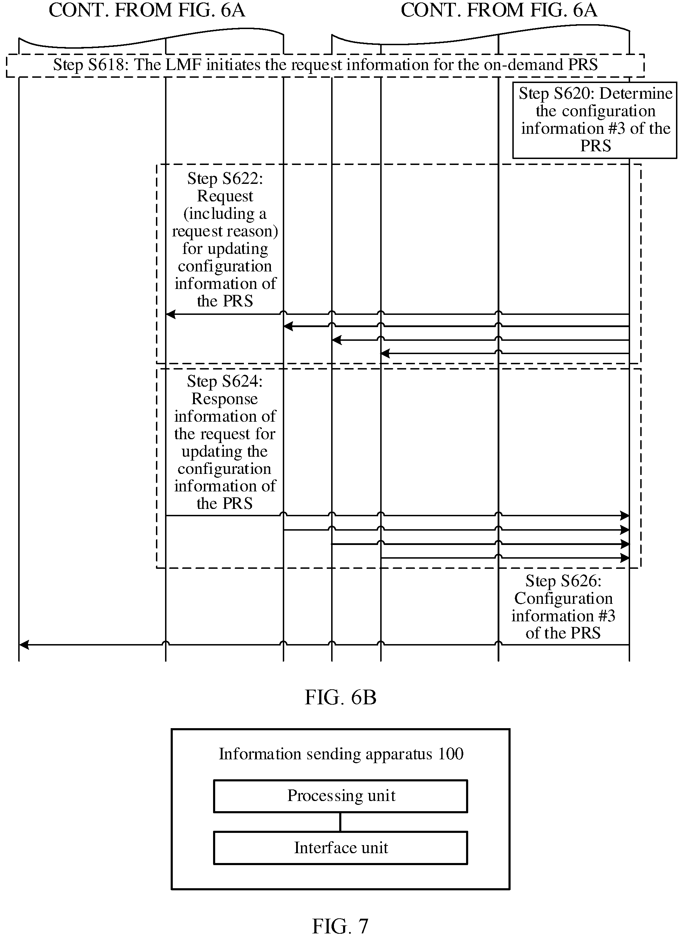

In the foregoing solution, the DRX configuration information of the UE is changed, so that a monitoring occasion PO of the paging signal is aligned with the PRS, to reduce the energy consumption of the UE. The following provides a solution in which the monitoring occasion PO of the paging signal is aligned with the PRS by changing configuration information of the PRS, as shown in FIG. 6A and FIG. 6B.

Step S610: An LMF exchanges configuration information of a PRS with at least one RAN or at least one TRP.

Specifically, the at least one RAN may include a RAN serving a UE, and the at least one TRP includes a TRP serving the UE.

Specifically, the LMF may exchange the configuration information of the PRS with the at least one RAN or the at least one TRP by using an NRPPa message.

Optionally, the foregoing step includes configuration information of an on-demand PRS (on-demand PRS).

Step S612: The UE sends request information for the on-demand PRS (UE-initiated on-demand PRS) to the LMF, to request a network to configure the on-demand PRS. Correspondingly, the LMF receives the request information for the on-demand PRS.

Specifically, the request information for the on-demand PRS includes a capability of the on-demand PRS of the UE and a capability of aligning DRX with the PRX.

Specifically, the capability of the on-demand PRS indicates whether the UE has the capability of the on-demand PRS, and the capability of aligning the DRX with the PRX indicates whether the UE has a capability of aligning the DRX with the PRX or whether the UE supports aligning the DRX with the PRX.

Step S614: If the UE supports the on-demand PRS, the LMF sends information #6 to the UE. Correspondingly, the UE receives the information #6.

Specifically, the information #6 includes configuration information of a plurality of sets of on-demand PRSs predefined by the LMF and a time domain offset of each set of PRSs relative to a current DRX cycle.

In addition, the information #6 may further include the DRX configuration information, an ID of the UE, and the like.

Step S616: The UE sends request information (UE-based on-demand PRS request) for configuration information of the on-demand PRS to the LMF based on the information #6 sent by the LMF.

Specifically, the UE may send the request information for the configuration information of the on-demand PRS by using an LPP message, where the request information for the configuration information of the on-demand PRS includes an identifier of configuration information of an on-demand PRS determined by the UE.

In addition, the request information for the configuration information of the on-demand PRS may further include a reason for initiating the request information for the configuration information of the on-demand PRS. For example, the reason may be that reception of a PO of the current DRX cycle is not aligned with PRX reception.

Optionally, the request information for the configuration information of the on-demand PRS may further include a time domain offset of the on-demand PRS determined by the UE relative to the current DRX cycle.

Optionally, in step S618, in addition to a case in which the UE initiates the on-demand PRS, an LMF side may also initiate the on-demand PRS based on obtained related information of the UE. For example, the related information of the UE may be a positioning measurement result of the UE.

Step S620: The LMF determines updated configuration information #3 of the PRS.

Step S622: The LMF requests the at least one RAN or the at least one TRP to update the configuration information (LMF-based on-demand PRS request) of the PRS, and updates original configuration information of the PRS to the newly determined configuration information #3 of the PRS.

Specifically, the request for updating the configuration information of the PRS may further include a reason for initiating the request for updating the configuration information of the PRS. For example, the reason may be that reception of the PO of the current DRX cycle of the UE is not aligned with the PRX reception.

Specifically, the request for updating the configuration information of the PRS further includes a time domain offset of a PRS corresponding to the at least one RAN or the at least one TRP relative to the current DRX cycle.

Step S624: After receiving the request of the LMF for updating the configuration information of the PRS, the at least one RAN or the at least one TRP replies, to the LMF, whether to receive the request of the LMF.

Step S626: If the at least one RAN or the at least one TRP receives the request of the LMF, the LMF sends the updated configuration information #3 of the PRS to the UE.

According to the foregoing method, the alignment with the PO of the DRX cycle can be implemented by changing the configuration information of the PRS, so that energy consumption of the UE can be reduced.

FIG. 7 is a block diagram of an information sending apparatus 100 according to an embodiment of this application. The information sending apparatus 100 may correspond to (for example, may be configured as or may be) the UE, the RAN, the AMF, and the LMF described in the embodiments in FIG. 3, FIG. 4, FIG. 6A, and FIG. 6B. In addition, modules or units in the information sending apparatus 100 are separately configured to perform actions or processing processes performed by the UE, the RAN, the AMF, and the LMF described in the embodiments in FIG. 3, FIG. 4, FIG. 6A, and FIG. 6B. Herein, to avoid repetition, detailed descriptions thereof are omitted.

In this embodiment of this application, the apparatus 100 may be the UE, the RAN, the AMF, and the LMF described in the embodiments in FIG. 3, FIG. 4, FIG. 6A, and FIG. 6B. In this case, the apparatus 100 may include a processor and a transceiver, and the processor is communicatively connected to the transceiver.

Optionally, the apparatus further includes a memory, and the memory is communicatively connected to the processor. Optionally, the processor, the memory, and the transceiver may be communicatively connected. The memory may be configured to store a program or instructions. The processor is configured to execute the program or the instructions stored in the memory, to control the transceiver to send information or a signal.

In this case, an interface unit in the apparatus 100 shown in FIG. 7 may correspond to the transceiver, and a processing unit in the apparatus 100 shown in FIG. 7 may correspond to the processor.

In this embodiment of this application, the apparatus 100 may be a chip (or a chip system) installed in the UE, the RAN, the AMF, and the LMF described in the embodiments in FIG. 3, FIG. 4, FIG. 6A, and FIG. 6B. In this case, the apparatus 100 may include: a processor and an input/output interface. The processor may be communicatively connected to transceivers in the UE, the RAN, the AMF, and the LMF described in the embodiments in FIG. 3, FIG. 4, FIG. 6A, and FIG. 6B through the input/output interface. Optionally, the apparatus further includes a memory, and the memory is communicatively connected to the processor. Optionally, the processor, the memory, and the transceiver may be communicatively connected. The memory may be configured to store a program or instructions. The processor is configured to execute the program or the instructions stored in the memory, to control the transceiver to send information or a signal.

In this case, the interface unit in the apparatus 100 shown in FIG. 7 may correspond to the input/output interface, and the processing unit in the apparatus 100 shown in FIG. 7 may correspond to the processor.

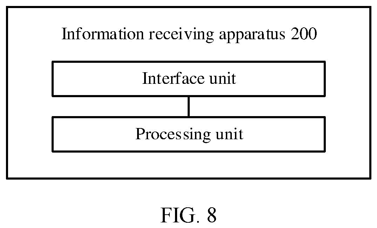

FIG. 8 is a block diagram of an information receiving apparatus 200 according to an embodiment of this application. The information receiving apparatus 200 may correspond to (for example, may be configured to implement) the UE, the RAN, the AMF, and the LMF described in the embodiments in FIG. 3, FIG. 4, FIG. 6A, and FIG. 6B. In addition, modules or units in the information receiving apparatus 200 are separately configured to perform actions or processing processes performed by the UE, the RAN, the AMF, and the LMF described in the embodiments in FIG. 3, FIG. 4, FIG. 6A, and FIG. 6B. Herein, to avoid repetition, detailed descriptions thereof are omitted.

In this embodiment of this application, the apparatus 200 may be the UE, the RAN, the AMF, and the LMF described in the embodiments in FIG. 3, FIG. 4, FIG. 6A, and FIG. 6B. In this case, the apparatus 200 may include a processor and a transceiver, and the processor is communicatively connected to the transceiver. Optionally, the apparatus further includes a memory, and the memory is communicatively connected to the processor. Optionally, the processor, the memory, and the transceiver may be communicatively connected. The memory may be configured to store a program or instructions. The processor is configured to execute the program or the instructions stored in the memory, to control the transceiver to receive information or a signal.

In this case, an interface unit in the apparatus 200 shown in FIG. 8 may correspond to the transceiver, and a processing unit in the apparatus 200 shown in FIG. 8 may correspond to the processor.

In this embodiment of this application, the apparatus 200 may be a chip (or a chip system) installed in the UE, the RAN, the AMF, and the LMF described in the embodiments in FIG. 3, FIG. 4, FIG. 6A, and FIG. 6B. In this case, the apparatus 200 may include: a processor and an input/output interface. The processor may be communicatively connected to transceivers in the UE, the RAN, the AMF, and the LMF described in the embodiments in FIG. 3, FIG. 4, FIG. 6A, and FIG. 6B through the input/output interface. Optionally, the apparatus further includes a memory, and the memory is communicatively connected to the processor. Optionally, the processor, the memory, and the transceiver may be communicatively connected. The memory may be configured to store a program or instructions. The processor is configured to execute the program or the instructions stored in the memory, to control the transceiver to receive information or a signal.

In this case, the interface unit in the apparatus 200 shown in FIG. 8 may correspond to the input interface, and the processing unit in the apparatus 200 shown in FIG. 8 may correspond to the processor.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for the particular applications, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, wherein the method comprises:

   receiving, by a terminal device, first configuration information, wherein the first configuration information indicates a first time, the first time is a receiving time of a first signal, and the first signal is one party of a paging signal and a reference signal;
   receiving, by the terminal device, second configuration information, wherein the second configuration information indicates a second time, the second time is a receiving time of a second signal, and the second signal is the other party of the paging signal and the reference signal;
   sending, by the terminal device, first information, wherein the first information is used to request to adjust the receiving time of the second signal, and the first information is determined based on the first configuration information; and
   receiving, by the terminal device, second information, wherein the second information indicates a third time, and the third time is an adjusted receiving time of the second signal.

2. The method according to claim 1, wherein the first signal is the reference signal, the second signal is the paging signal, and the first information comprises information about the reference signal.

3. The method according to claim 2, wherein the information about the reference signal comprises at least one of the following information of the reference signal:
   an absolute radio frequency channel number ARFCN, a sending cycle, a time domain offset, and measurement duration.

4. The method according to any one of claims 1 to 3, wherein the first signal is the reference signal, the second signal is the paging signal, and the first information comprises information about the paging signal.

5. The method according to claim 4, wherein the information about the paging signal comprises at least one of the following information:

   a discontinuous reception DRX cycle to which the paging signal belongs, a quantity of paging frame groups, identification information of a paging frame group, a paging frame offset, a paging frame index, an adjustment value of the paging frame offset, a quantity of paging occasions, a paging occasion index, an adjustment value of a first globally unique temporary terminal device identity GUTI, a second GUTI, an adjustment value of the second GUTI, and a first time window, wherein
   the first GUTI identifies the terminal device, the second GUTI is used to page the terminal device, and the first time window is used to receive the paging signal.

6. The method according to any one of claims 1 to 5, wherein the second information comprises at least one of the following information:

   the discontinuous reception DRX cycle to which the paging signal belongs, the quantity of paging frame groups, the identification information of the paging frame group, the paging frame offset, the paging frame index, the adjustment value of the paging frame offset, the quantity of paging occasions, the paging occasion index, the adjustment value of the first GUTI, the second GUTI, and the adjustment value of the second GUTI, wherein the first GUTI identifies the terminal device, and the second GUTI is used to page the terminal device.

7. The method according to any one of claims 1 to 6, wherein the first information is carried in location measurement indication information, and the location measurement indication information is used to request inactive-state DRX configuration information.

8. The method according to claim 7, wherein the location measurement indication information further comprises a first identifier, and the first identifier indicates that the location measurement indication information is used to request the inactive-state DRX configuration information.

9. The method according to any one of claims 1 to 8, wherein the sending, by the terminal device, first information comprises:

indicating, by the terminal device by using a long term evolution positioning protocol LPP layer, a non-access NAS layer to send the first information; and/or
the receiving, by the terminal device, second information comprises:
indicating, by the terminal device by using the long term evolution positioning protocol LPP layer, the non-access NAS layer to receive the second information.

10. The method according to any one of claims 1 to 9, wherein the first information is carried in a terminal device assistant message UAI.

11. The method according to any one of claims 1 to 10, wherein the first information and the second information comprise information about a first area, and the first area is a validity area of the reference signal.

12. The method according to any one of claims 1 to 11, wherein the sending, by the terminal device, first information comprises:

sending, by the terminal device, the first information to a mobility management network element,
or
sending, by the terminal device, the first information to an access network device.

13. The method according to claim 1, wherein the first signal is the paging signal, the second signal is the reference signal, and the first information comprises information about the paging signal.

14. The method according to claim 13, wherein the information about the paging signal comprises at least one of the following information:
a discontinuous reception DRX cycle to which the paging signal belongs, a quantity of paging frame groups, identification information of a paging frame group, a paging frame offset, a paging frame index, a quantity of paging occasions, a paging occasion index, and an identifier of the terminal device.

15. The method according to claim 13 or 14, wherein the first signal is the paging signal, the second signal is the reference signal, and the first information comprises information about the reference signal.

16. The method according to claim 15, wherein the information about the reference signal comprises at least one of the following information:

an absolute radio frequency channel number ARFCN, a sending cycle, a time domain offset, measurement duration, and a first offset, wherein
the first offset is determined based on the first configuration information.

17. The method according to any one of claims 1 to 16, wherein the first information further comprises a reason for sending the first information.

18. The method according to any one of claims 1 to 17, wherein an interval between the third time and the first time is less than an interval between the second time and the first time.

19. The method according to any one of claims 1 to 18, wherein the first configuration information or the second configuration information is discontinuous reception DRX configuration information.

20. The method according to any one of claims 1 to 19, wherein the first information further comprises information about a capability of the terminal device for aligning the first signal with the second signal.

21. The method according to any one of claims 1 to 20, wherein the second information further indicates an identifier of one terminal device group for the terminal device.

22. The method according to any one of claims 1 to 21, wherein the first signal is the paging signal, and the second signal is a positioning reference signal; or the first signal is a positioning reference signal, and the second signal is the paging signal.

23. A communication method, wherein the method comprises:

receiving, by a mobility management network element, first information, wherein the first information is used to request to adjust a receiving time of a paging signal;
sending, by the mobility management network element, second information, wherein the second information indicates a third time, and the third time is an adjusted receiving time of the paging signal; and
sending, by the mobility management network element, the paging signal at the third time.

24. The method according to claim 23, wherein the first information comprises information about a reference signal.

25. The method according to claim 24, wherein the information about the reference signal comprises at least one of the following information of the reference signal:
an absolute radio frequency channel number ARFCN, a sending cycle, a time domain offset, and measurement duration.

26. The method according to any one of claims 23 to 25, wherein the first information further comprises information about the paging signal.

27. The method according to claim 26, wherein the information about the paging signal comprises at least one of the following information:

a discontinuous reception DRX cycle to which the paging signal belongs, a quantity of paging frame groups, identification information of a paging frame group, a paging frame offset, a paging frame index, an adjustment value of the paging frame offset, a quantity of paging occasions, a paging occasion index, an adjustment value of a first globally unique temporary terminal device identity GUTI, a second GUTI, an adjustment value of the second GUTI, and a first time window, wherein
the first GUTI identifies a terminal device, the second GUTI is used to page the terminal device, and the first time window is used to receive the paging signal.

28. The method according to any one of claims 23 to 27, wherein the second information comprises at least one of the following information:

the discontinuous reception DRX cycle to which the paging signal belongs, the quantity of paging frame groups, the identification information of the paging frame group, the paging frame offset, the paging frame index, the adjustment value of the paging frame offset, the quantity of paging occasions, the paging occasion index, the adjustment value of the first GUTI, the second GUTI, and the adjustment value of the second GUTI, wherein
the first GUTI identifies the terminal device, and the second GUTI is used to page the terminal device.

29. The method according to any one of claims 23 to 28, wherein the first information and the second information comprise information about a first area, and the first area is a validity area of the reference signal.

30. The method according to any one of claims 24 to 29, wherein an interval between the third time and a first time is less than an interval between a second time and the first time, the second time is a receiving time of the paging signal before the paging signal is adjusted, and the first time is a receiving time of the reference signal.

31. The method according to any one of claims 24 to 30, wherein the first information further comprises information about a capability of the terminal device for aligning the paging signal with the reference signal.

32. The method according to any one of claims 23 to 31, wherein the second information further indicates an identifier of one terminal device group for the terminal device.

33. The method according to any one of claims 24 to 32, wherein the reference signal is a positioning reference signal.

34. A communication method, wherein the method comprises:

   receiving, by an access network device, first information, wherein the first information is used to request to adjust a receiving time of a paging signal;
   sending, by the access network device, second information, wherein the second information indicates a fourth time, and the fourth time is an adjusted receiving time of the paging signal; and
   sending, by the access network device, the paging signal at the fourth time.

35. The method according to claim 34, wherein the first information comprises information about a reference signal.

36. The method according to claim 35, wherein the information about the reference signal comprises at least one of the following information of the reference signal:
   an absolute radio frequency channel number ARFCN, a sending cycle, a time domain offset, and measurement duration.

37. The method according to any one of claims 34 to 36, wherein the first information further comprises information about the paging signal.

38. The method according to claim 37, wherein the information about the paging signal comprises at least one of the following information:

   a discontinuous reception DRX cycle to which the paging signal belongs, a quantity of paging frame groups, identification information of a paging frame group, a paging frame offset, a paging frame index, an adjustment value of the paging frame offset, a quantity of paging occasions, a paging occasion index, and a first time window, wherein
   the first time window is used to receive the paging signal.

39. The method according to any one of claims 34 to 38, wherein the second information comprises at least one of the following information:
   the discontinuous reception DRX cycle to which the paging signal belongs, the quantity of paging frame groups, the identification information of the paging frame group, the paging frame offset, the paging frame index, the adjustment value of the paging frame offset, the quantity of paging occasions, and the paging occasion index.

40. The method according to any one of claims 34 to 39, wherein the first information and the second information comprise information about a first area, and the first area is a validity area of the reference signal.

41. The method according to any one of claims 34 to 40, wherein the first information is carried in location measurement indication information, and the location measurement indication information is used to request inactive-state DRX configuration information.

42. The method according to claim 41, wherein the location measurement indication information further comprises a first identifier, and the first identifier indicates that the location measurement indication information is used to request the inactive-state DRX configuration information.

43. The method according to any one of claims 34 to 42, wherein the first information is carried in a terminal device assistant message UAI.

44. The method according to any one of claims 34 to 43, wherein sending, by the access network device, the paging signal at the third time comprises:

receiving, by the access network device at the fourth time, a next generation interface application protocol NG-AP sent by a mobility management network element, wherein the NG-AP sent by the mobility management network element carries at least one of identification information of the terminal device, identification information of a paging frame PF group, a paging frame offset, and a paging occasion PO index of the terminal device; and sending, by the access network device, the paging signal to the terminal device based on the NG-AP.

45. The method according to any one of claims 34 to 44, wherein the sending, by the access network device, second information comprises:

receiving, by the access network device, third information of a location management network element, wherein the third information comprises a time window for receiving the reference signal by the terminal device and a measurement reconfiguration request message; or receiving, by the access network device, a measurement reconfiguration request message of a location management network element, wherein the measurement reconfiguration request message comprises a second identifier, and the second identifier indicates that the measurement reconfiguration request message is used to trigger to reconfigure DRX configuration information of the terminal device;
determining, by the access network device, the second information based on the third information or the measurement reconfiguration request message; and
sending, by the access network device, the second information.

46. The method according to any one of claims 35 to 45, wherein an interval between the fourth time and a first time is less than an interval between a second time and the first time, the second time is a receiving time of the paging signal before the paging signal is adjusted, and the first time is a receiving time of the reference signal.

47. The method according to any one of claims 35 to 46, wherein the first information further comprises information about a capability of the terminal device for aligning the paging signal with the reference signal.

48. The method according to any one of claims 34 to 47, wherein the second information further indicates an identifier of one terminal device group for the terminal device.

49. The method according to any one of claims 35 to 48, wherein the reference signal is a positioning reference signal.

50. A communication apparatus, comprising:
a processor, wherein the processor is coupled to a memory, the memory is configured to store a program or instructions, and when the program or the instructions are executed by the processor, the apparatus is enabled to perform the communication method according to any one of claims 1 to 49.

51. A computer-readable storage medium, wherein the computer-readable storage medium stores a computer program, and when the computer program is run on a computer, the computer is enabled to perform the communication method according to any one of claims 1 to 49.

52. A computer program product, comprising computer program code, wherein when the computer program code is run, the communication method according to any one of claims 1 to 49 is implemented.

FIG. 1

group UE_ID1

group UE_ID3

SFN0 1 2 3 4 5 6 7 8 9 10 11 12 13 14 15 16 17 18 19 20 21 22 23 24 25 26 27 28 29 30 31

| | | PF | | | | | | | | PF | | | | | | | | PF | | | | | | | | PF | | | | | |

group UE_ID2

group UE_ID4

FIG. 2

| UE | RAN | AMF | LMF |
|---|---|---|---|

Step S310: Determine configuration information #1 of a PRS

Step S312: Information #1 (used to request DRX configuration information)

Step S314: Determine DRX configuration information #1 based on the information #1

Step S316: Information #2 (including the DRX configuration information #1)

Step S318: Determine a PF #1 and a PO #1 based on the information #2

Step S320: NG-AP

Step S322: Paging signal

Step S324: Receive the paging information on the PO #1

FIG. 3

| UE | RAN | AMF | LMF |
|---|---|---|---|

Step S410: Determine configuration information #2 of a PRS

Step S412: Information #3 (used to request DRX configuration information)

Step S414: Information #4 (used to request the DRX configuration information)

Step S416: Determine DRX configuration information #2 based on the information #3 and/or the information #4

Step S418: Information #5 (including the DRX configuration information #2)

Step S420: Determine a PF #2 and a PO #2 based on the information #5

Step S422: Paging signal

Step S424: Receive the paging signal on the PO #2

FIG. 4

PRS 1  PRS 2          PRS 2          PRS 1  PRS 2

p1      p2

FIG. 5

|  | RAN | Neighboring RAN |  |  | | | |
| UE | gNB/TRP | gNB/TRP | gNB/TRP | gNB/TRP | AMF | LMF |

Step S610: Determine configuration information #3 of a PRS (including configuration information of an on-demand PRS)

Step S612: Request information for the on-demand PRS (including a capability of the on-demand PRS and a capability of aligning DRX with the PRX)

Step S614: Information #6 (including predefined configuration information of a plurality of sets of on-demand PRSs and a configuration value or an offset value of a PRS in a DRX cycle)

Step S616: Request (including a request reason) for the configuration information of the on-demand PRS

TO FIG. 6B                    TO FIG. 6B

FIG. 6A

CONT. FROM FIG. 6A                    CONT. FROM FIG. 6A

Step S618: The LMF initiates the request information for the on-demand PRS

Step S620: Determine
the configuration
information #3 of the
PRS

Step S622:
Request
(including a
request reason)
for updating
configuration
information of
the PRS

Step S624:
Response
information of
the request for
updating the
configuration
information of
the PRS

Step S626:
Configuration
information #3
of the PRS

FIG. 6B

Information sending apparatus 100

Processing unit

Interface unit

FIG. 7

Information receiving apparatus 200

Interface unit

Processing unit

FIG. 8

## INTERNATIONAL SEARCH REPORT

| International application No. |
|---|
| **PCT/CN2023/129028** |

### A. CLASSIFICATION OF SUBJECT MATTER

H04W52/02(2009.01)i; H04W68/02(2009.01)i

According to International Patent Classification (IPC) or to both national classification and IPC

### B. FIELDS SEARCHED

Minimum documentation searched (classification system followed by classification symbols)

IPC: H04W,H04L

Documentation searched other than minimum documentation to the extent that such documents are included in the fields searched

Electronic data base consulted during the international search (name of data base and, where practicable, search terms used)

CNTXT, ENTXTC, CJFD, CNKI, 3GPP, ISI: 寻呼, 配置, 接收, 时间, 请求, 调整, 修改, 更新, paging, configure, receive, time, request, adjustment, modify, update

### C. DOCUMENTS CONSIDERED TO BE RELEVANT

| Category* | Citation of document, with indication, where appropriate, of the relevant passages | Relevant to claim No. |
|---|---|---|
| X | WO 2021127948 A1 (HUAWEI TECHNOLOGIES CO., LTD.) 01 July 2021 (2021-07-01) description, paragraphs 93-98, and figure 3 | 23-52 |
| Y | WO 2021127948 A1 (HUAWEI TECHNOLOGIES CO., LTD.) 01 July 2021 (2021-07-01) description, paragraphs 93-98, and figure 3 | 1-22 |
| Y | WO 2021195848 A1 (GUANGDONG OPPO MOBILE COMMUNICATIONS CO., LTD.) 07 October 2021 (2021-10-07) description, paragraphs 92-130, and figure 4 | 1-22 |
| X | CN 112788746 A (HUAWEI TECHNOLOGIES CO., LTD.) 11 May 2021 (2021-05-11) description, paragraphs 105-120 | 23-52 |
| A | WO 2022141009 A1 (HUAWEI TECHNOLOGIES CO., LTD.) 07 July 2022 (2022-07-07) entire document | 1-52 |
| A | NOKIA et al. "Solution for improved paging in MUSIM devices (KI#1,2,3)" *SA WG2 Meeting #136 S2-1911673*, 22 November 2019 (2019-11-22), entire document | 1-52 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 January 2024** | **23 January 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

### INTERNATIONAL SEARCH REPORT
**Information on patent family members**

International application No.

**PCT/CN2023/129028**

| Patent document cited in search report | | | Publication date (day/month/year) | Patent family member(s) | | | Publication date (day/month/year) |
|---|---|---|---|---|---|---|---|
| WO | 2021127948 | A1 | 01 July 2021 | US | 2022322286 | A1 | 06 October 2022 |
| | | | | CN | 114731616 | A | 08 July 2022 |
| WO | 2021195848 | A1 | 07 October 2021 | CN | 114982298 | A | 30 August 2022 |
| CN | 112788746 | A | 11 May 2021 | WO | 2021089015 | A1 | 14 May 2021 |
| | | | | EP | 4040874 | A1 | 10 August 2022 |
| | | | | US | 2022394669 | A1 | 08 December 2022 |
| | | | | CN | 115665855 | A | 31 January 2023 |
| | | | | CN | 115665856 | A | 31 January 2023 |
| WO | 2022141009 | A1 | 07 July 2022 | CN | 116438879 | A | 14 July 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211372792
- CN 202211380600